# EUROPÄISCHE PATENTSCHRIFT

(11) **EP 2 790 997 B1**
(45) Veröffentlichungstag und Bekanntmachung des Hinweises auf die Patenterteilung: **09.12.2015**
(21) Anmeldenummer: 12801600.3
(22) Anmeldetag: 14.12.2012
(51) Int. Cl.: B62K 3/00, B62M 1/12, B62M 1/14, B62M 3/14, B62M 1/26, B62M 1/30

(54) **ROLLER MIT HANDANTRIEB**
SCOOTER WITH MANUAL DRIVE
TROTTINETTE À ENTRAÎNEMENT MANUEL

(30) Priorität: 15.12.2011 DE 102011056471
(43) Veröffentlichungstag der Anmeldung: 22.10.2014
(73) Patentinhaber: Demiralay, Murat, 22457 Hamburg (DE); Charoensuk, Suphachai, 20359 Hamburg (DE)
(72) Erfinder: Demiralay, Murat, 22457 Hamburg (DE); Charoensuk, Suphachai, 20359 Hamburg (DE)
(74) Vertreter: RGTH
(86) Internationale Anmeldenummer: PCT/EP2012/075621
(87) Internationale Veröffentlichungsnummer: WO 2013/087876

(56) Entgegenhaltungen:
- CN-A- 101 850 819
- CN-Y- 2 471 690
- CN-Y- 201 056 275
- DE-A1- 10 106 283
- DE-A1- 10 158 594
- DE-U1-202009 017 031
- FR-A- 626 773
- GB-A- 183 298
- US-A1- 2006 009 331
- US-A1- 2011 031 714

## Beschreibung

### Technisches Gebiet

Der Gegenstand der Anmeldung betrifft einen Roller mit Handantrieb nach dem Oberbegriff des Anspruches 1.

Bei Rollern mit einem Trittbrett für einen auf ihm stehenden Fahrer werden durch Muskelkraft betätigbare Handantriebe mit einem Lenker realisiert. Mit einer Betätigung des Lenkers durch eine Pendelbewegung wird ein Vorder- oder eine Hinterrad des Rollers angetrieben.

### Stand der Technik

Aus der DE 200 17 601 U1 ist ein Roller, mit einer Lenkstange, einem Vorderrad, einem Gestell, einem Trittbrett und einem Hinterrad bekannt. Die Lenkstange ist um eine am vorderen Ende des Gestells liegende erste Drehachse schwenkbar. Der Roller kann durch Schwenken der Lenkstange um die Drehachse in Bewegung versetzt werden. An der Lenkstange ist an deren Kopf ein Handgriff 12 angeordnet. Über die erste Drehachse ist die Lenkstange in der Nähe ihres unteren Endes mit dem Gestell verbunden. Eine zweite Drehachse, die am unteren Ende der Lenkstange angeordnet ist, verbindet die Lenkstange mit einer Stange. Am hinteren Ende des Gestells 30 ist mittels einer Schwenkachse ein Zahnradsektor schwenkbar aufgehängt. Mit diesem wird der durch Muskelkraft betätigbare Rollerantrieb realisiert.

Die DE 21 2005 000 038 U1 zeigt und beschreibt einen Roller mit einem angetriebenen Vorderrad. Eine Antriebseinrichtung des Rollers weist einen Antriebshebel auf, welcher durch einen Nutzer bogenförmig nach vorne und nach hinten hin- und herbewegbar ist. Der Hebel weist eine Schwenkachse, einen nutzerbedienbaren Abschnitt auf einer Seite der Schwenkachse und einen Antriebsabschnitt auf der anderen Seite der Schwenkachse auf, wobei der Antriebsabschnitt um dieselbe Schwenkachse herum wie der nutzerbedienbare Abschnitt bewegbar ist, so dass er durch den und mit dem nutzerbedienbaren Abschnitt bogenförmig hin und her bewegbar ist und das angetriebene Rad vorwärts drehbewegt, wodurch das Fahrzeug vorwärts angetrieben wird. An dem unteren Ende der Lenkstangensäule ist eine Kurbel angebracht, welche mit einem Zahnkranz in Eingriff steht, der koaxial an die Achse des Vorderrades montiert ist. Dies hat einen äußeren, ringförmigen Zahnkranz mit identischen und mit in gleichmäßigem Abstand voneinander angeordneten Zähnen.

In der DE 10 2008 057 400 B3 wird ein Roller vorgestellt, bei dem der Lenker auf einem Hebelarm befestigt wird, dessen Drehpunkt von der Vorderachse mindestens doppelt so weit entfernt ist wie von der Hinterachse und der nahe oder an der Hinterachse liegt. Dadurch ergibt sich ein Hebelweg am Lenker von vorne-unten, nach hinten-oben, was einer Bewegungsachse des Menschen entspricht und was den Einsatz nicht nur der Armmuskeln, sondern auch den der stärksten Muskelgruppen in Beinen, Gesäß und Rücken erlaubt. Um dies zu unterstützen, ist das Trittbrett relativ lang und vorne hoch gewölbt, so dass eine gute und sichere Kraftabstützung möglich ist. Die Lenkbewegung wird über scherenartig verbundene Gelenkhebel vom Lenker auf das Vorderrad übertragen. Die Gelenkhebel sind um die Querachsen beweglich, um die Lenkachse aber torsionssteif. Sie gleichen durch die Scherenbewegung den Arbeitshub des Hebelarms aus und ermöglichen ein Herunterfalten des Hebelarms zum Transport. Zugleich begrenzen sie den Arbeitshub nach hinten-oben, wobei ein Anschlag ein völliges Strecken der beiden Gelenkhebel verhindert und für ein kontrolliertes Falten beim Vorwärtshub sorgt. Die Kraftübertragung auf das Hinterrad erfolgt durch einen Riemen. Der Riemen ist nach dem Prinzip des einfachen Flaschenzugs um Umlenkrollen geführt und überträgt die Zugkraft auf eine Antriebsscheibe mit Freilauf am Hinterrad.

Die DE 93 19 101 U1 lehrt, einen Antrieb für einen Roller einzusetzen, bei dem das Vorderrad mit einem Freilaufgesperre versehen ist und der Lenker um eine zur geometrischen Drehachse des Vorderrades parallele geometrische Schwenkachse hin- und hergehend schwenkbar am Lagerkörper gelagert ist und mit dem Vorderrad antriebsverbunden ist. Mit einer Ritzelwelle drehfest verbunden ist ein Zahnrad, welches über eine Antriebskette mit einem Zahnrad antriebsverbunden ist.

Die DE 10 2009 024166 A1 beschreibt einen Fahrradantrieb, bei dem es sich um eine Kombination eines Lenkers mit einem Armantrieb handelt.

Aus der WO 2011/022926 A1 ist ein Fahrrad bzw. Dreirad bekannt, welches durch Handantrieb und Fußantrieb angetrieben wird. In einer Ausführungsform ist das Fahrrad mit einem Druck- und Zugrahmen antreibbar.

Eine Fahrradantriebseinheit mit mehreren Pedalantriebsarten ist aus der DE 11 2004 000 779 B4 bekannt.

Eine weitere Antriebseinheit für ein Fahrrad offenbart die EP 0 514 824 A1.

Die US 2005/0035569 A1 beschreibt ein handangetriebenes Fahrzeug, welches durch Betätigung eines schwingbaren Schaftes angetrieben wird.

Ein Fahrzeugantriebssystem nach der US 2006/0131832 A1 umfasst Handkurbeln, welche in ihrer Höhe verstellbar sind.

Die US 2006/009331 A1, auf der der Oberbegriff von Anspruch 1 basiert, offenbart einen handangetriebenen Roller. Der Roller weist zwei gegenläufig vor- und zurückschwenkbare Handgriffe auf. Über ein Paar von Hebelstangen wird die Schwenkbewegung der Handgriffe in eine Rotationsbewegung jeweils eines einfach-gerichteten Lagers übertragen.

Die DE 20 2009 017 031 U1 offenbart einen Tretroller mit Kurbelantrieb bei dem durch Drehung einer mit Handgriffen versehenen Handkurbel über eine Kette oder ein Zahnriemen ein angetriebenes Rad des Tretrollers angetrieben wird.

Die CN 101 850 819 A zeigt einen Roller bei dem die Lenkstange mittels zweier starr miteinander verbundener Handgriffe vor und zurück geschwenkt werden kann. Die Schwenkbewegung der Lenkstange wird über eine sperrklinkenartige Vorrichtung auf das Vorderrad des Rollers zum Antrieb übertragen.

Ein elliptischer Roller wird in der DE 101 58 594 A1 gezeigt. Auf der rechten und auf der linken Seite des Rollers befindet sich jeweils eine Hebelanordnung, wobei jede Hebelanordnung einen Lenkhebel sowie ein Fußpedal aufweist. Durch Vor- und Zurückbewegung der Lenkhebel und gleichzeitiger Be- und Entlastung der Pedale wird eine laufähnliche Bewegung imitiert.

Die DE 101 06 283 A1 beschreibt einen Handantrieb für Fahrzeuge. Der Handantrieb umfasst zwei Antriebshebel, welche gleichzeitig auf und ab bewegt werden. Die gleichzeitige Auf- und Ab-Bewegung der Antriebshebel wird über Antriebskettenräder auf eine einzelne, umlaufende Antriebskette übertragen.

Ein weiterer handangetriebener Roller wird in der US 2011/031714 A1 offenbart. Der Roller wird über Handkurbeln angetrieben, welche gleichzeitig als Lenker für den Roller dienen. Eine gemeinsame Rotation der Handkurbeln im Uhrzeigersinn bewirkt dabei über eine Kette eine Vorwärtsbewegung des Rollers. Wird die Rotationsrichtung umgekehrt, so tritt eine Bremswirkung ein, welche den Roller verlangsamt.

Ein Spielzeugroller mit einer Kurbelbetätigung einer Handkurbel wird in der GB 183 298 A bereitgestellt. Dieser Roller weist mit einer einzelnen Kette ein einzelnes Antriebsmittel auf.

Die CN 201 056 275 Y offenbart einen weiteren Roller mit Handkurbelantrieb.

Die FR 626 773 A offenbart einen handangetriebenen Roller. Zwei starr miteinander verbundene Handgriffe sind um ein Gelenk drehbar angeordnet.

Die CN 2 471 690 Y zeigt einen handbetriebenen Roller umfassend zweier Handhebel.

### Darstellung der Erfindung: Aufgabe, Lösung, Vorteile

Dem Gegenstand der Anmeldung liegt die Aufgabe zugrunde, einen Roller zu schaffen, der das abwechslungsreiche und gezielte Trainieren verschiedener Muskelgruppen des Oberkörpers erlaubt und einen optimierten, leicht zu wartenden Antrieb bietet, welcher eine Vielzahl an möglichen Fahrstilen gestattet.

Diese Aufgabe wird durch einen Roller mit Handantrieb mit den im kennzeichnenden Teil des Anspruches 1 angegebenen Merkmalen in Verbindung mit seinen Oberbegriffsmerkmalen gelöst.

Weiterhin wird diese Aufgabe durch einen Roller mit den im kennzeichnenden Teil des Anspruches 2 angegebenen Merkmalen in Verbindung mit seinen Oberbegriffsmerkmalen gelöst.

Indem der Handantrieb sowohl durch eine Handkurbelbetätigung als auch durch eine Schwenkbetätigung betätigbar ausgeführt ist, können verschiedene Muskelgruppen des Oberkörpers, ähnlich wie bei einem "Crosstrainer", durch eine gegenläufige Pendelbewegung der Arme trainiert werden. Insbesondere werden Bizeps, Trizeps, seitliche Bauchmuskeln sowie die Brust- und Rückenmuskulatur trainiert. Ein Antrieb durch Kurbelbewegung ist möglich und nicht lediglich aufs Schwenken reduziert.

Auch zeitgleiche gegenläufige Kurbel- und Pendelbewegungen beider Pedalarme sind möglich.

Das erfindungsgemäße Schwenken und Kurbeln erlaubt also Antriebsbewegungen wie bei einem "Crosstrainer", das heißt ein gleichzeitiges entgegengesetztes Schwenken oder Kurbeln eines linken und rechten Pedalarms. Dadurch ergeben sich vielfältige Fahrmöglichkeiten und Fahrstile. Die erweiterten Fahrstile ermöglichen dem Nutzer das Trainieren verschiedener Muskelpartien. Erfindungsgemäß kann der Antrieb durch ein Schwenken oder Kurbeln von Pedalarmen erfolgen.

Ein zeitgleiches entgegengesetztes Kurbeln oder Schwenken muss aber nicht stattfinden. Es ist auch möglich, zeitgleich beide Pedalarme in dieselbe Richtung zu kurbeln oder zu schwenken.

Der Anmeldungsgegenstand nutzt ein zweites Antriebsmittel, insbesondere einen zweiten Kettenantrieb, das mit dem anzutreibenden Rad und einen zweiten, unabhängig vom ersten Antriebsmittel betätigbaren, Handgriff wirkverbunden ist, wobei beide Antriebsmittel einen Freilauf beziehungsweise einen Leerlauf bei einer Rückbewegung umfassen. Durch den Kettenantrieb ist eine größere Übersetzung und somit größere Geschwindigkeit möglich. Auch ist ein Lenken durch Drehen der Lenkstange möglich. Ein permanenter Antrieb ist möglich, und zwar ohne eine erzwungene "Leerlauf-Phase". Dadurch ist eine höhere Beschleunigung möglich, und der Antrieb auch vorteilhaft, um die erreichte Höchstgeschwindigkeit zu halten.

Erfindungsgemäß ist vorgesehen, dass ein Antrieb gegenläufig zum anderen Antrieb ausgeführt ist.

Der zweite Handgriff ist nicht zwangsläufig unabhängig vom ersten Antriebsmittel ausgeführt. Eine unabhängige Betätigung der Handgriffe ist bei Konstruktionen mit getrennter oberer Achse möglich, insbesondere bei denen auch Antriebsbewegungen in der Art wie bei einem "Crosstrainer" möglich sind.

Der permanente Antrieb ermöglicht einen Antrieb beim Vorwärtsschwenk und auch beim Rückwärtsschwenk, ebenso wie beim Kurbeln in beiden Richtungen.

Bei dem Anmeldungsgegenstand können die Stellungen der Pedalarme getrennt voneinander eingestellt werden.

Der Roller umfasst ein Hinterrad, das heißt mindestens ein Hinterrad und ein Vorderrad, das heißt mindestens ein Vorderrad.

Weitere vorteilhafte Ausgestaltungen des Anmeldungsgegenstandes sind in den Unteransprüchen gekennzeichnet.

In einer vorteilhaften Weiterbildung des erfindungsgemäßen Antriebes ist ein beidseitiger Antrieb vorgesehen. Es findet keine mittige Platzierung der Zahnräder, sondern eine äußere Platzierung der Zahnräder statt.

Bei einer weiteren vorteilhaften Ausführung des Anmeldungsgegenstandes umfasst ein Antrieb einer Antriebsseite zwei gegenläufige Antriebsräder, insbesondere Zahnräder. Dadurch wird eine Betätigungsrichtung des Antriebes auf dieser Antriebsseite umgedreht. Ein Antrieb durch Schwenken oder Kurbeln in beiden Richtungen ist somit durch einen Einsatz von zwei gegenläufigen Kettenantrieben und von mindestens zwei Zahnrädern möglich. Die beiden Zahnräder dienen dazu, quasi auf einer Seite die Drehrichtung des Kettenantriebs umzukehren.

Eine Weiterbildung des Anmeldungsgegenstandes zeichnet sich dadurch aus, dass jeder Antrieb als Kettenantrieb mit einer Gangschaltung ausgeführt ist. Bei dieser Konstruktion ist ein permanentes Kurbeln möglich und der Einbau von Gangschaltungen vorgesehen. Durch das permanente Kurbeln werden die erforderlichen Umdrehungen der Kette erreicht, damit die Kette von einer ursprünglichen Zahnkranzscheibe auf eine Zielzahnkranzscheibe wechseln kann. Durch den Einsatz der Gangschaltung sind höhere Geschwindigkeiten und auch ein komfortableres Fahren bei einer Steigung möglich. Zweckmäßigerweise hat jeder Antrieb ein Zahnkranzpaket mit einem Kettenspannelement in der Art einer Fahrrad-Gangschaltung oder eine Naben-Gangschaltung, wie bei einem Fahrrad.

Ein Lenken und gleichzeitige Muskelkraftübertragung ist möglich, wenn jeder Antrieb eine Handkurbel mit jeweils horizontalem Handgriff umfasst. Alternativ kann jeder Antrieb mit einem Pedalarm mit im Wesentlichen senkrechten Schwenkgriffen versehen sein, wobei die Schwenkbewegung durch ein Verbindungselement in eine Kreisbewegung des Antriebs umgesetzt wird. Diese Pendelarmbetätigung ist vergleichbar mit einer Crosstrainer-Ausführung. Senkrechte Schwenkgriffe, zum Beispiel Kurbelverlängerungsstangen, dienen in erster Linie als Verlängerung der Pedalarme, um dem Fahrer zu ermöglichen, die Kurbel- oder Pendelbewegung von einem erhöhten Standpunkt aus auszuführen. Wenn oben an den Kurbelverlängerungsstangen eine Pendelbewegung stattfindet, so findet auch am Pedalarm eine Pendelbewegung statt und keine kreisförmige Kurbelbewegung. Diese würde nur zustande kommen, wenn auch an den vertikalen Kurbelverlängerungsstangen eine Kurbelbewegung stattfindet.

Vorzugsweise werden zwei Ketten verwendet. Ausführungsformen mit zwei, jeweils einem Handgriff zugeordneten Antriebsseiten mit jeweils mehreren Antrieben sind auch möglich, beispielsweise mit vier Ketten.

Eine weitere, sehr wichtige, Maßnahme beinhaltet, dass der Handantrieb auf das Vorderrad einwirkt, wobei das Vorderrad mit zwei Handgriffen wirkverbunden ist. Die Antriebskonstruktion ist einfach und hat einen kurzen Kraftübertragungsweg.

### Kurze Beschreibung der Zeichnungen

Ausführungsbeispiele werden anhand der Zeichnungen näher erläutert, wobei weitere vorteilhafte Weiterbildungen des Anmeldungsgegenstandes und Vorteile derselben beschrieben sind.

Es zeigen:

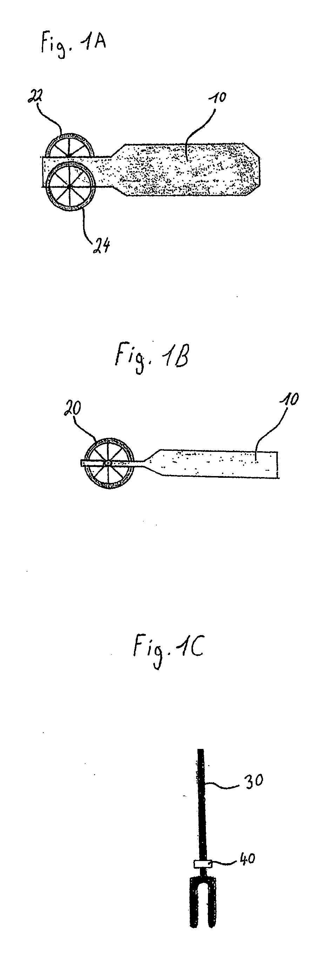

Fig. 1A bis 17B verschiedene Ausführungsformen des Anmeldungsgegenstandes.

In den Figuren sind gleiche Teile mit denselben Bezugszeichen versehen.

### Bester Weg zur Ausführung der Erfindung

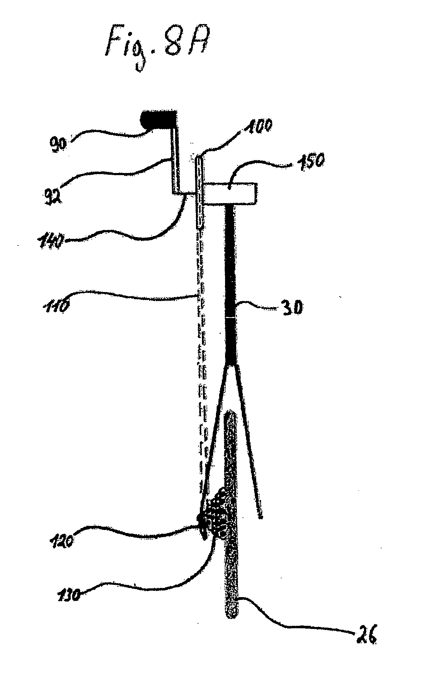

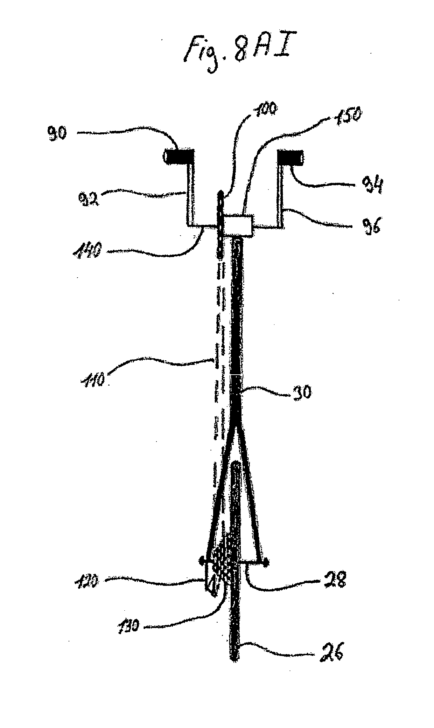

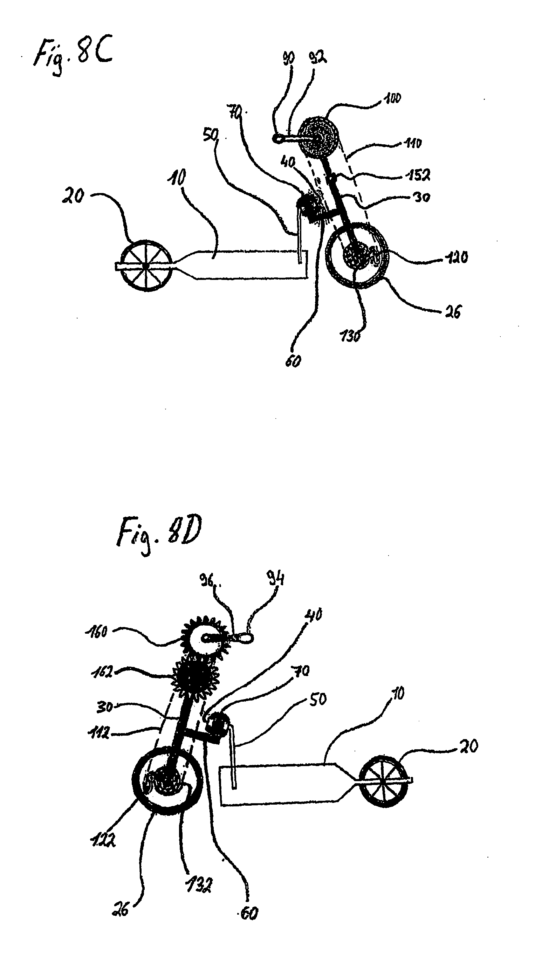

Fig. 8A oder Fig. 8AI zeigen einen Roller mit Handantrieb, welcher nicht Gegenstand der vorliegenden Erfindung ist und welcher nur zur Verdeutlichung der Erfindung angeführt wird, wobei die Handpedale 90 und 94 mit jeweils einem Pedalarm 92, 96 zu sehen sind. Der Roller umfasst ein Trittbrett 10 für einen auf ihn stehenden Fahrer, mindestens ein Hinterrad 20, eine Verbindungsstange 50, einen Abstandshalter 60, eine Halterung 40 und eine Durchführungsstange 70 mit Lagerelement 72. Des Weiteren umfasst der Roller mindestens ein Vorderrad 26, sowie einen auf das Vorderrad 26 wirkenden Lenker. Zudem ist auch auf der rechten Seite des Rollers (in der Abbildung links) ein rechter Kettenantrieb abgebildet beziehungsweise vorhanden, bestehend aus dem rechten Kettenblatt 100, einer rechten Kette 110, einem Schaltwerk mit Kettenspannelement 120 und einem rechten Zahnkranzpaket 130. Auch wurden eine vorhandene Vorderachse 28, eine Lenkstange 30, ein oberes Tretlagergehäuse 150 und eine obere Achse 140 abgebildet.

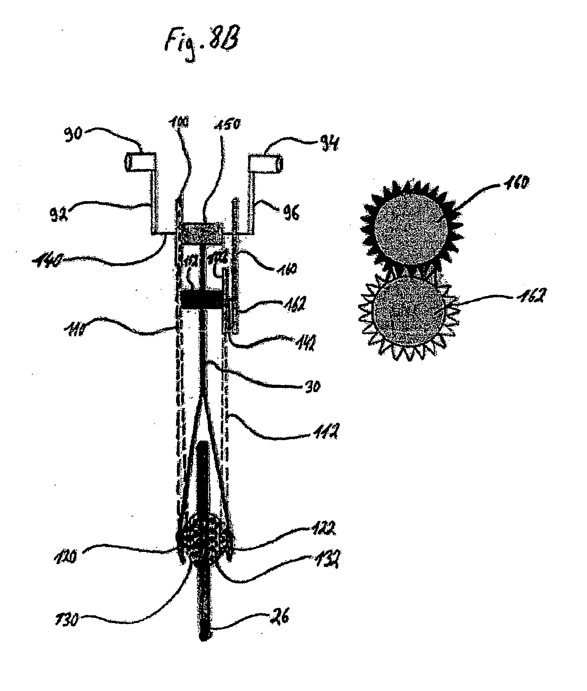

Gemäß Fig. 8C ist noch ein unteres Tretlagergehäuse 152 vorhanden. Fig. 8C ist eine Seitenansicht der Fig. 8B. Für die einfachste, jedoch nicht von der Erfindung umfasste Konstruktion (mit einfachstem Fahrradantrieb) ist die Fig. 8AI maßgeblich.

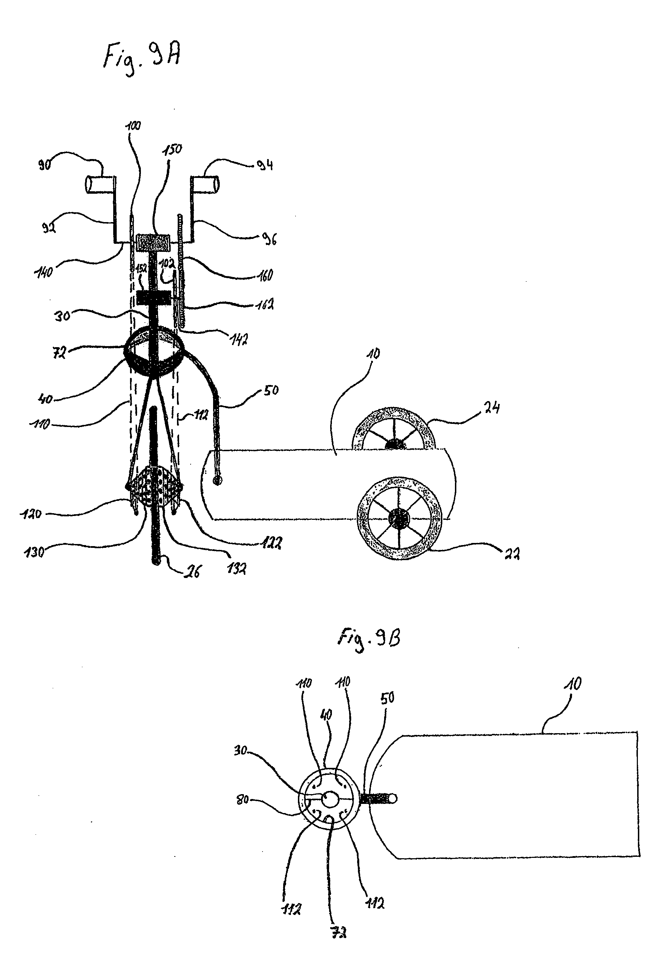

Wie Fig. 9A zeigt, sind zwei betätigbare Handpedale, und zwar ein rechtes Pedal 90 und ein linkes Pedal 94, vorhanden. Das rechte Pedal 90 hat einen Arm 92 und steht mit einer rechten Antriebskette 110 in Wirkverbindung. Das linke Pedal 94 hat einen Arm 96 und steht mit einer linken Antriebskette 112 in Wirkverbindung. Dadurch ist Handantrieb durch eine Handkurbelbetätigung, insbesondere sowohl durch eine Handkurbelbetätigung (Kurbeln an jedem Pedal 90, 94) als auch durch eine Schwenkbetätigung (gegensinniges Vor- und Zurückziehen der Pedale 90, 94) betätigbar ausgeführt ist.

Die beiden Handgriffe sind miteinander wirkverbunden und auch mit beiden Ketten 110, 112, da sie eine gemeinsame Achse 140 besitzen.

In diesem Ausführungsbeispiel können die Pedalarme nicht unabhängig voneinander bewegt werden, da beide Pedalarme 92, 96 eine gemeinsame Achse 140 haben. Eine gegenläufige Kurbel- oder Pendelbewegung ist daher in diesem Fall nicht möglich.

Als Antriebsmittel dient der Kettenantrieb mit den Ketten 110, 112, der mit dem Vorderrad 26 und den Pedalen 90, 94, die Handgriffe aufweisen, wirkverbunden ist. Es sind im Grunde ein erstes Antriebsmittel mit der Kette 110 beziehungsweise ein erster Kettenantrieb und ein zweites Antriebsmittel mit der Kette 112 beziehungsweise ein zweiter Kettenantrieb vorhanden. Beide Antriebe treiben das Vorderrad 26 unabhängig voneinander. Beide Antriebsmittel haben einen Freilauf beziehungsweise einen Leerlauf bei einer Rückbewegung. Ein Antrieb ist gegenläufig zum anderen Antrieb ausgeführt.

Die Fig. 1A zeigt eine Trittbrettvariante mit zwei Hinterrädern 22, 24. Fig. 1B zeigt eine weitere Variante mit einem einzigen Hinterrad 20 für einen Roller, der als Aluroller ausgeführt sein kann. Fig. 1C zeigt, dass eine Lenkstange 30 für den Roller mit einer Halterung 40 versehen sein kann.

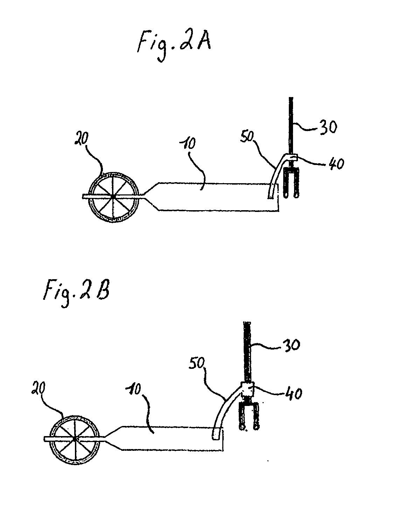

Gemäß der Ausführung in Fig. 2A ist der Roller mit gleich großen Vorder- und Hinterrädern versehen. Das Trittbrett 10 ist durch ein Verbindungselement beziehungsweise einer Verbindungsstange 50 mit der Halterung 40 verbunden. Die Lenkstange 30 wird durch die Halterung 40 hindurchgeführt und lässt sich nach links und rechts drehen, um eine Lenkbewegung auszuführen. Das Vorderrad 26 kann auch größer als das Hinterrad 20 sein, wie in Fig. 2B angedeutet ist. Die Lenkstange 30 ist vertikal angeordnet.

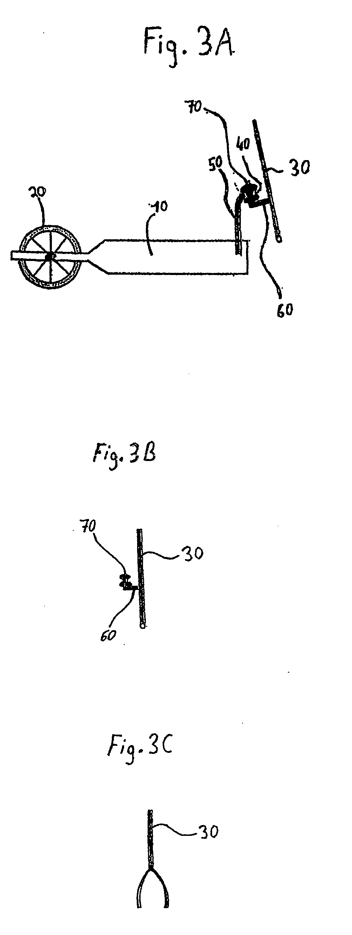

Eine andere Lenkerbefestigung zeigt. Fig. 3A. Die Lenkstange 30 ist geneigt um beispielsweise 5° bis 15°. Diese Ausführung nutzt einen Abstandshalter 60, der an der Lenkstange 30 zu ihr senkrecht befestigt ist. Die Lenkstange 30 ist über den Abstandshalter 60 durch eine Durchführungsstange 70 mit Lagerelement 72 mit der Halterung 40 verbunden. Der Abstandshalter 60 ist mit der Lenkstange 30 fest verbunden, zum Beispiel verschweißt. Die bewegliche Lagerung findet in der Halterung 40 statt, in der sich eine Drehachse befindet. Die Lenkstange 30 mit dem Abstandshalter 60 ist auch in Fig. 3B gezeigt.

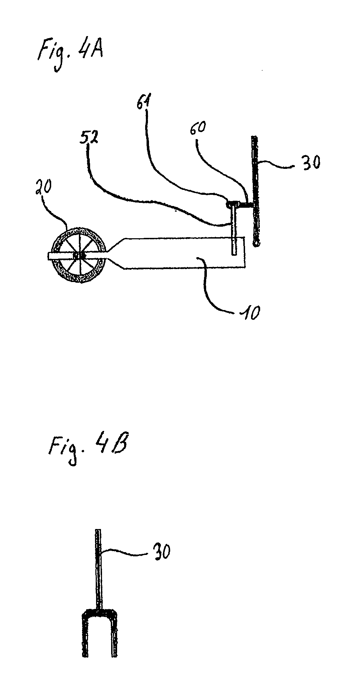

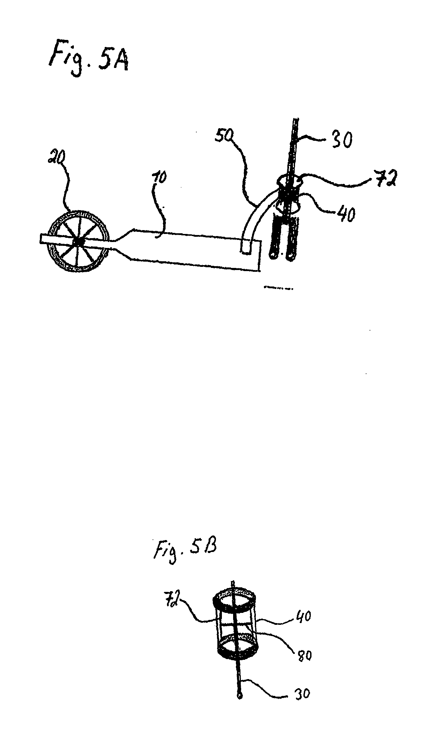

Abweichend von der in Fig. 2B gezeigten Form kann die Lenkstange 30 ein gabelförmiges, gekrümmtes Ende haben, wie Fig. 3C zeigt. Fig. 5A zeigt eine eher rechtwinkelige Gabelanordnung. Fig. 4A zeigt eine Ausführungsvariante, bei der die Lenkstange 30 vertikal angeordnet und durch den Abstandshalter 60 mittels einem Kugellager 61 mit einem Rahmenelement (Verbindungsstange 52) verbunden ist. Die Drehachse bildet das Kugellager 61. Wenn die Lenkstange 30 gedreht wird, dann dreht sich der Abstandshalter 60 mit. Am unteren Ende ist die Stange 52 mit dem Trittbrett 10 verbunden.

Die Lenkstange 30 kann, wie Fig. 5A zeigt, vertikal angeordnet und mit einem Lagerelement 72 verbunden sein, wie Fig. 5B zeigt. Dort sind eine obere und eine untere Lagerstelle beziehungsweise eine Halterung 40 mit Kugellagern und ein Verbindungselement 80 zu sehen.

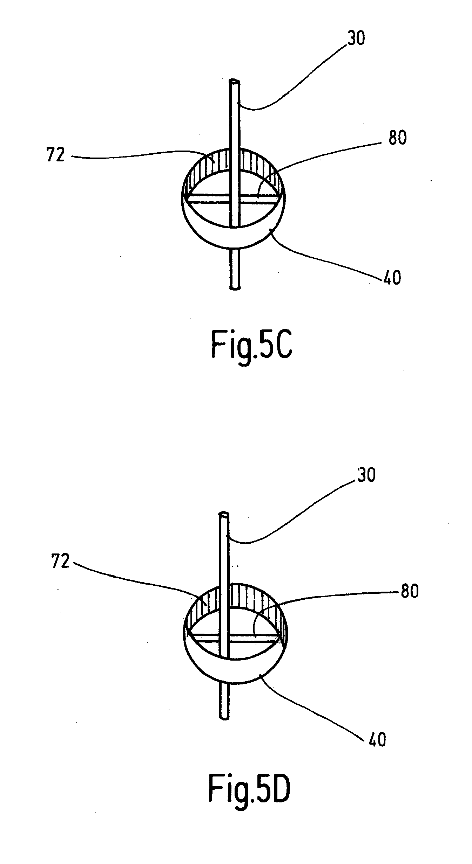

Fig. 5B veranschaulicht den inneren Aufbau innerhalb der Halterung 40, und zwar, dass die Lenkstange 30 mit dem Verbindungselement 80 fest verbunden ist. Durch den frei liegenden Innenraum kann mindestens eine Kette 110, 112 geführt werden. Wie Fig. 5C zeigt, können sowohl Durchmesser als auch Höhe der Halterung 40 auch abweichend dimensioniert werden. Auch muss die Lenkstange 30 innerhalb des Lagerelements 72 nicht zentral platziert sein, wie Fig. 5D zeigt.

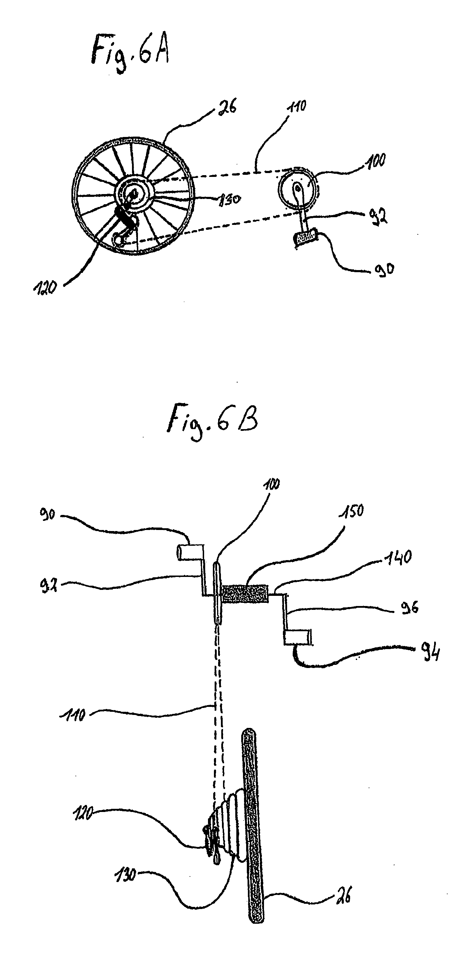

Fig. 6A zeigt einen Vorderradantrieb beziehungsweise einen Kettenantrieb mit dem Vorderrad 26, dem Pedal 90, einem Pedalarm 92 (Tretkurbel), einem Kettenblatt 100, der Kette 110, einem Schaltwerk mit Kettenspannelement 120, einem Zahnkranzpaket 130 mit zum Beispiel Rechtsgewinde und Rechtsantrieb. Diese Konstruktion wird bei Fahrrädern angewendet. Dieser Kettenantrieb hat mehrere Gänge. Die Antriebsrichtung ist hierbei zum Beispiel rechts. Im Rollzustand und beim Rückwärtskurbeln entgegengesetzt der Antriebsrichtung herrscht Leerlauf vor. Fig. 6B zeigt eine Variante, bei der beiden Pedalarme 92, 96 durch eine obere Achse 140, die durch ein oberes Tretlagergehäuse 150 führt, verbunden sind.

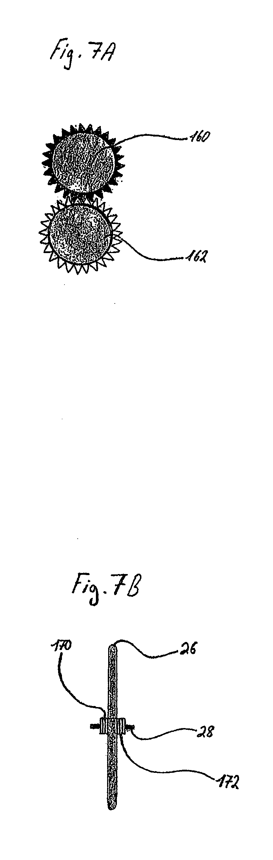

Ein Antrieb einer Antriebsseite umfasst zwei gegenläufige Antriebsräder beziehungsweise zwei Zahnräder 160, 162, die in Fig. 7A dargestellt sind. Dadurch wird eine Betätigungsrichtung des Antriebes auf dieser Antriebsseite umgedreht. Dargestellt sind ein linkes oberes Zahnrad 160 und ein linkes unteres Zahnrad 162. Diese sind ineinander verzahnt. Wenn beide Zahnräder 160, 162 in Bewegung sind, hat das linke untere Zahnrad 162 eine andere (entgegengesetzte) Drehrichtung als das linke obere Zahnrad 160.

Fig. 7B zeigt das Vorderrad 26 mit Vorderachse 28, eine rechte Seite einer Nabe 195 mit Rechtsgewinde 170 für die Befestigung eines rechten Zahnkranzpakets 130 und eine linke Seite der Nabe 195 mit Linksgewinde 172 für die Befestigung des linken Zahnkranzpakets 132. Andere Anordnungen mit anderen Bauteilen, wie zum Beispiel einer Kontermutter oder einer Dichtungskappe, sind möglich.

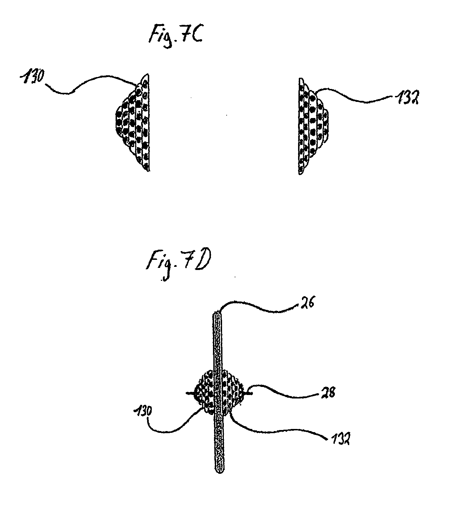

Fig. 7C zeigt ein rechtes Zahnkranzpaket 130 mit Rechtsgewinde und Rechtsantrieb und ein linkes Zahnkranzpaket 132 mit Linksgewinde und Linksantrieb. Ein linkes Zahnkranzpaket 132 mit Linksgewinde und Linksantrieb wird üblicherweise nicht bei Fahrrädern angewandt, lediglich das rechte Zahnkranzpaket 130.

Bei einer Rechtsdrehung des Pakets 130 erfolgt ein Antrieb, während eine Drehung nach links Leerlauf bewirkt. Beim Paket 132 erfolgt der Antrieb durch eine Drehung nach links. Eine Drehung nach rechts bewirkt ein Leerlauf. Für beide Zahnkranzpakete 130, 132 gilt: Bei einer Drehrichtung nach vorn in Fahrtrichtung findet ein Antrieb statt, während die Drehrichtung nach hinten, die entgegensetzt der Fahrtrichtung ist, Leerlauf bewirkt. Das linke Zahnkranzpaket 132 ist spiegelverkehrt zum rechten Zahnkranzpaket 130 angeordnet. Fig. 7D zeigt das Vorderrad 26 mit montierten Zahnkranzpaketen 130, 132.

Die nicht von der Erfindung umfasste Ausführungsform der Fig. 8A zeigt den Antrieb auf der rechten Seite, der in der Zeichnung auf der linken Seite dargestellt ist. Der Antrieb ist analog zu einem Fahrradantrieb ausgeführt. Durch die Drehung des rechten Kettenblatts 100 nach vorn in Fahrtrichtung wird ein Antrieb erzeugt (Rechtsantrieb), während bei einer Drehung des rechten Kettenblatts 100 nach hinten, entgegen der Fahrtrichtung, ein Leerlauf erzeugt wird.

Fig. 8B zeigt eine Ausführungsform, bei der beide Zahnräder 160, 162 in die Antriebskonstruktion integriert sind. Hierbei kann auch beim Rückwärtsdrehen beziehungsweise -schwenken auch Antrieb erzeugt werden. Das linke obere Zahnrad 160 ist fest an einer oberen Achse 140 fixiert, so dass es sich mit den Pedalarmen 92, 96 mitdreht. Das linke, untere Zahnrad 162 dreht sich in entgegengesetzter Richtung zum linken, oberen Zahnrad 160. Das linke, untere Zahnrad 162 sowie das linke Kettenblatt 102 sind fest an einer unteren Achse 142 montiert. Das linke Kettenblatt 102 führt eine Drehbewegung nach vorn aus. Dies gilt, wenn die Pedalarme 92, 96 nach hinten entgegen der Fahrtrichtung geschwenkt oder gekurbelt werden. Das entspricht einer Linksdrehrichtung. Auf der linken Seite ist ein Antrieb beziehungsweise sind Antriebsbauteile wie die auf der rechten Seite vorhanden, die jedoch spiegelverkehrt angeordnet sind.

Die Zahnkranzpakete 130, 132 bewirken den Antrieb des Vorderrades 26 und ein Rollen des Rollers. Ein Freilauf sorgt dafür, dass sich die Pedalarme 92, 96 in einem Rollzustand nicht mitdrehen müssen.

Ein Rollzustand kann so beschrieben werden:
Die Zahnkranzpakete 130, 132 mit Kern funktionieren so, dass der Kern unter anderem für den Antrieb des Vorderrads 26 zuständig ist. Sobald die Zahnkränze in Antriebsrichtung gedreht werden (jeweils in Fahrtrichtung nach vorn), dreht sich der Kern mit und bewirkt eine Drehung des Vorderrads 26 in Antriebsrichtung. Wenn sich der Roller jedoch im Rollzustand befindet, das heißt das Vorderrad 26 dreht sich ohne Antriebswirkung, sondern lediglich durch die kinetische Energie von einer vorhergehenden Beschleunigung, dreht sich zwar der Kern mit dem Vorderrad 26 mit, die Zahnkranzpakete 130, 132 bleiben jedoch davon unberührt. Die Ketten 110, 112 bleiben also im Rollzustand des Rollers im Ruhezustand. Die Pedalarme 92, 96 drehen sich also im Rollzustand auch nicht mit.

"Keine Blockade" wirkt so, dass beim Drehen der rechten und linken Pedalarme 92, 96 in Fahrtrichtung nach vorn, auf der rechten Seite des Rollers ein Antrieb stattfindet, während auf der linken Seite des Rollers Leerlauf vorherrscht. Die Drehung der Pedalarme 92, 96 in Fahrtrichtung nach vorn bewirkt zwar, dass sich das linke Kettenblatt 102, die linke Kette 112 und das linke Zahnkranzpaket 132 nach rechts entgegengesetzt der Antriebsrichtung bewegen (entgegen der Fahrtrichtung), jedoch kommt es hierbei zu keiner Blockade, da das linke Zahnkranzpaket 132 mit Linksantrieb ausgestattet ist. Das heißt bei einer Drehung des linken Zahnkranzpakets 132 nach rechts entgegen der Antriebsrichtung, findet Leerlauf statt. Das Vorderrad 26 dreht sich weiterhin in Fahrtrichtung, wie auch die beiden Kerne der Zahnkranzpakete 130, 132. In diesem Fall greift auf der rechten Seite das Zahnkranzpaket 130 den Kern, so dass die Antriebswirkung erzielt wird. Auf der linken Seite hingegen dreht sich der Kern des linken Zahnkranzpakets 132, der mit der Vorderradnabe 195 verschraubt ist, durch die Drehung der Vorderradnabe 195 in Fahrtrichtung nach vorn. Hierbei greift der Kern des Zahnkranzpakets 132, welches durch die obere Mechanik entgegengesetzt der Fahrtrichtung gedreht wird, nicht.

Beim Rückwärtskurbeln der Pedalarme 92, 96 wird, wie oben erläutert, auf der linken Seite ein Antrieb erzeugt, während auf der rechten Seite Leerlauf vorherrscht. Zwar werden auch hier das rechte Kettenblatt 100, die rechte Kette 110 und das rechte Zahnkranzpaket 130 (in der Zeichnung links) entgegen der Antriebsrichtung nach links gedreht, jedoch wird der Kern, der sich durch die Drehung der Nabe nach vorn in Fahrtrichtung dreht, nicht durch das Zahnkranzpaket 130 gefasst. Auf der linken Seite wiederum (in der Zeichnung rechts) fasst das Zahnkranzpaket 132 den Kern und erzeugt so eine Antriebswirkung.

Fig. 8C zeigt eine Rollervariante mit einer Rahmenkonstruktion gemäß Fig. 3A und den beschriebenen Kettenantrieben und einem Tretlagergehäuse 152. Diese Figur ist auch zugleich eine Seitenansicht der Fig. 8B von rechts. Die Fig. 8D zeigt den Roller gemäß Fig. 8B von der Seitenansicht von links mit dem linken Schaltwerk mit Kettenspannelement 122, dem linken Zahnkranzpaket 132 mit Linksgewinde und Linksantrieb, dem linken oberen Zahnrad 160 und dem linken unteren Zahnrad 162.

Die Figuren 8E1, 8E2, 8E3 veranschaulichen mögliche Fahrstile.

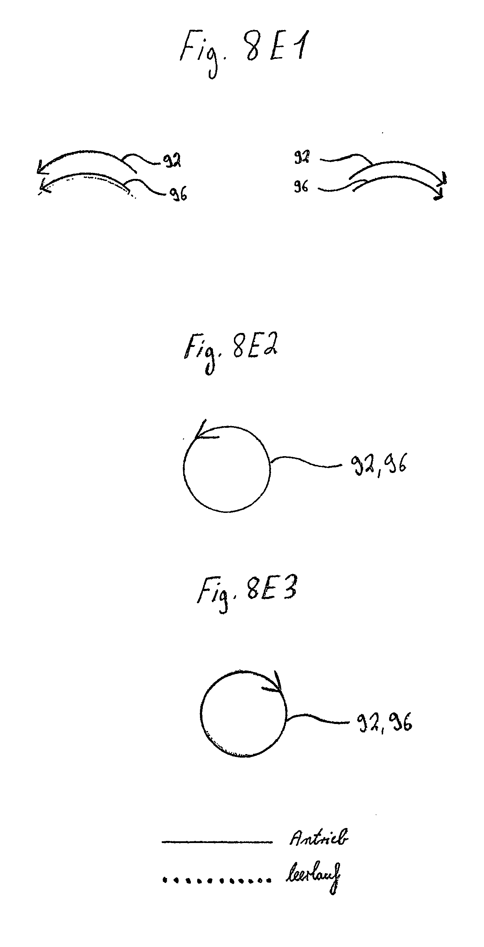

Die Fig. 8E1 zeigt einen der möglichen Fahrstile in der Seitenansicht von links. Es stellt dar, dass durch eine Schwenkbewegung der Pedalarme 92, 96 nach vorn und nach hinten Antrieb erzeugt werden kann. Es ist dabei möglich, die Länge der Schwenkbewegung individuell zu bestimmen, das heißt der Nutzer des Rollers kann selbst bestimmen, wie weit er nach vorn oder nach hinten schwenken möchte. Des Weiteren ist es möglich, die Schwenkbewegung an jedem Teilabschnitt des Kurbelkreises zu vollführen, zum Beispiel halbkreisförmige Schwenkbewegungen nach vorn und nach hinten in der oberen Kurbelkreishälfte oder auch viertelkreisförmige Schwenkbewegungen in der unteren Kreishälfte. Der Antrieb findet beim Vorwärtsschwenken auf der rechten Seite statt, während auf der linken Seite Leerlauf vorherrscht. Dennoch kann auch durch das Schwenken des linken Pedalarms 96 nach vorn in Fahrtrichtung Antrieb auf der rechten Seite erzeugt werden, da beide Pedalarme 92, 96 an derselben Achse 140 befestigt sind. Beim Rückwärtsschwenken wird auf der linken Seite Antrieb erzeugt, und auf der rechten Seite des Rollers herrscht Leerlauf vor. Durch die gemeinsame Achse 140 kann auch durch das Rückwärtsschwenken mit dem rechten Pedalarm 92 auf der linken Seite Antrieb erzeugt werden.

Die Fig. 8E2 zeigt einen weiteren Fahrstil in der Seitenansicht von links. In diesem Fall ist eine vollständig kreisförmige Bewegung der Pedalarme 92, 96 nach vorn in Fahrtrichtung dargestellt, das heißt der Antrieb wird durch ein vollständig kreisförmiges Kurbeln nach vorn in Fahrtrichtung erzeugt. Hierbei wird der Roller ausschließlich auf der rechten Seite angetrieben, während auf der linken Seite Leerlauf vorherrscht. Dennoch sind beide Pedalarme 92, 96 durch die gemeinsame Achse 140 für den Antrieb verantwortlich.

Die Fig. 8E3 zeigt einen zusätzlichen Fahrstil in der Seitenansicht von links. In diesem Fall wird eine vollständig kreisförmige Bewegung der Pedalarme 92, 96 nach hinten entgegengesetzt der Fahrtrichtung, vollzogen. Der Antrieb wird also durch eine kreisförmige Kurbelbewegung nach hinten, entgegen der Fahrtrichtung erzeugt. Hierbei findet der Antrieb ausschließlich auf der linken Seite statt, während auf der rechten Seite Leerlauf vorherrscht. Dennoch sind beide Pedalarme 92, 96 durch die gemeinsame Achse 140 für den Antrieb verantwortlich.

Zudem ist der Roller auch wie ein herkömmlicher Roller nutzbar: Der Antrieb wird hierbei, wie bei einem herkömmlichen Roller, durch das Abstoßen mit einem Fuß erreicht.

In der Praxis hält sich der Nutzer an den Pedalen 90, 94 fest und kurbelt die Pedalarme 92, 96 mit diesen Pedalen 90, 94 an.

Fig. 9A zeigt eine weitere Rollervariante, die Folgendes umfasst:
Ein Trittbrett 10, ein linkes Hinterrad 22, ein rechtes Hinterrad 24, ein Vorderrad 26, eine Lenkstange 30 mit gabelförmigem Ende, eine Halterung 40 mit Kugellagern, eine Verbindungsstange 50, ein Lagerelement 72, ein rechtes Pedal 90, ein rechter Pedalarm 92 (rechte Tretkurbel), ein linkes Pedal 94, ein linker Pedalarm 96 (linke Tretkurbel), ein rechtes Kettenblatt 100, ein linkes Kettenblatt 102, eine rechte Kette 110, eine linke Kette 112, ein rechtes Schaltwerk mit Kettenspannelement 120, ein linkes Schaltwerk mit Kettenspannelement 122, ein rechtes Zahnkranzpaket mit Rechtsgewinde und Rechtsantrieb 130, ein linkes Zahnkranzpaket mit Linksgewinde und Linksantrieb 132, eine obere Achse 140, eine untere Achse 142, ein oberes Tretlagergehäuse 150, ein unteres Tretlagergehäuse 152, ein linkes oberes Zahnrad 160 und ein linkes unteres Zahnrad 162. Diese Figur verdeutlicht die Ausführungsvarianten der Figuren 5A, 5B, 5C/5D. Sie zeigt eine weitere Lösung, wie bei einer Lenkbewegung verhindert werden kann, dass die Ketten 110, 112 an der Verbindungsstange 50 anstoßen. Im Gegensatz zur Lösung der Fig. 8C kann bei dieser Lösung auf einen Abstandshalter 60 verzichtet werden. Dies wird dadurch erreicht, dass die Ketten 110, 112 durch das Lagerelement 72 und die Halterung 40 geführt werden. Beide Bauteile haben in diesem Fall vergrößerte Durchmesser, so dass die Ketten 110, 112 durch sie hindurchpassen, das heißt ihre Durchmesser sind abhängig von den Dimensionen der Ketten 110, 112. Die Lenkstange 30 ist hierbei durch die Verbindungsstange 80 zwischen Lagerelement 72 und Lenkstange 30, mit dem Lagerelement 72 verbunden. Bei einer Lenkbewegung drehen sich also die Lenkstange 30, die gesamten Antriebsbauteile, die Verbindungsstange 80 zwischen Lagerelement 72 und Lenkstange 30 und das Lagerelement 72 mit. Innerhalb des Lagerelements 72 drehen sich die Ketten 110, 112 stets mit der Verbindungsstange 80 zwischen Lagerelement 72 und Lenkstange 30 mit, so dass es zu keinem Zeitpunkt zu einem Kontakt zwischen diesen Bauteilen kommt.

Die Fig. 9B zeigt einen Schnitt durch das Lagerelement 72 und die Halterung 40 in der Draufsicht. Diese Figur soll die Lösung der Fig. 9A verdeutlichen. Es wird hierbei verdeutlicht, dass die Ketten 110, 112, die durch das Lagerelement 72 und die Halterung 40 geführt werden, stets einen Abstand zur Lenkstange 30 und zur Verbindungsstange 80 haben. Bei einer Drehbewegung drehen sich Lenkstange 30, Verbindungsstange 80, rechte Kette 110, linke Kette 112 und das Lagerelement 72 innerhalb der Halterung 40 (die starr bleibt), ohne dass die Kette an ein anderes Bauteil stößt.

Die möglichen Fahrstile sind mit denen der Figuren 8E1 bis 8E3 identisch.

Zudem ist der Roller auch wie ein herkömmlicher Roller nutzbar: Der Antrieb wird hierbei, wie bei einem herkömmlichen Roller, durch das Abstoßen mit einem Fuß erreicht.

In der Praxis hält sich der Nutzer an den Pedalen 90, 94 fest und kurbelt die Pedalarme 92, 96 mit diesen Pedalen 90, 94 an.

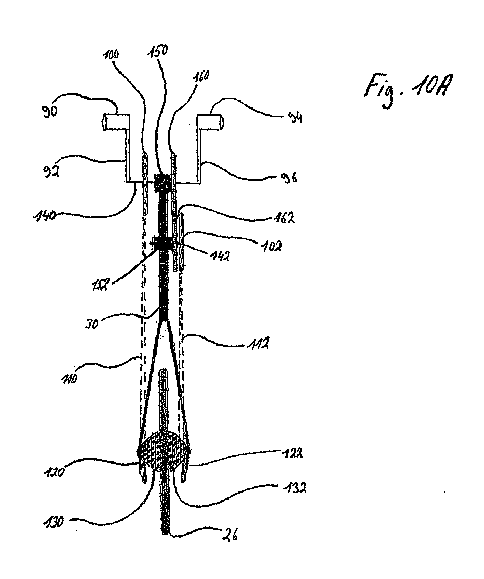

Die Fig. 10A zeigt eine Variante ähnlich zur Variante gemäß Fig. 8B. in der Frontansicht. Der einzige Unterschied ist, dass in dieser Konstruktion die Zahnräder 160 und 162, näher nach innen angeordnet sind, das heißt das linke Kettenblatt 102 befindet sich außen. Der Vorteil dieser Lösung besteht darin, dass die linke Kette 112 im Falle einer Reparatur, einer Wartung oder eines Wechsels mit weniger Aufwand entfernt werden kann. Im Gegensatz zu der Konstruktion der Fig. 8B muss das linke untere Zahnrad 162 nicht vorher entfernt werden.

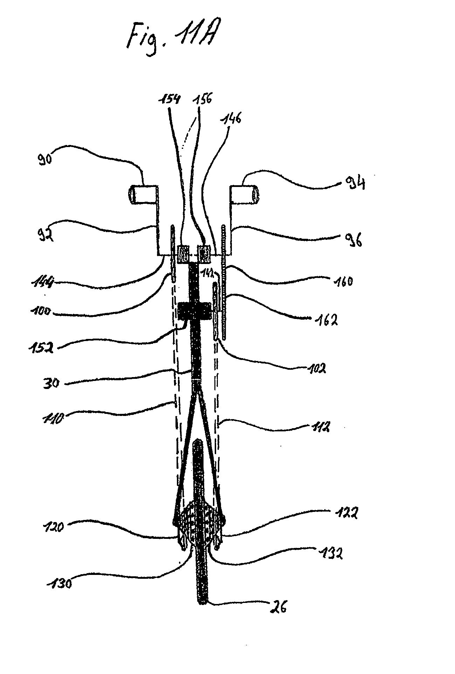

Die Fig. 11A zeigt eine Variante ähnlich zur Variante gemäß Fig. 8B. Anstelle des oberen Tretlagergehäuses (in Fig. 8B oberes Tretlagergehäuse 150) sind zwei separate Tretlagergehäuse 154 und 156 eingesetzt. Das rechte, obere Tretlagergehäuse 154 und das linke, obere Tretlagergehäuse 156 funktionieren wie herkömmliche Tretlagergehäuse, wie auch das untere Tretlagergehäuse 152, welches weiterhin zum Einsatz kommt. Das rechte, obere Tretlagergehäuse 154 und das linke, obere Tretlagergehäuse 156 funktionieren unabhängig voneinander, so dass keine Blockade an den oberen Achsen 144 und 146 zustande kommt, wenn das Vorderrad 26 rückwärts gedreht wird, wie es in Fig. 8B mit dem oberen Tretlagergehäuse 150 und der oberen Achse 140 passiert wäre. Eine Blockade im oberen Tretlagergehäuse 150 an der oberen Achse 140 in Fig. 8B wäre wie folgt zustande gekommen: Beim Rückwärtsdrehen des Vorderrads 26 würde der Kern des rechten Zahnkranzpakets 130 in das rechte Zahnkranzpaket 130 greifen und ein Rückwärtsdrehen desselben verursachen. Dadurch würde sich die rechte Kette 110 rückwärts drehen, so dass sich oben das rechte Kettenblatt 100, der rechte Pedalarm 92 und die obere Achse 140 ebenfalls nach hinten drehen würden.

Auf der linken Seite des Rollers würde ein Rückwärtsdrehen des Vorderrads 26 ebenfalls ein Rückwärtsdrehen des linken Zahnkranzpakets 132 bewirken. Ebenso würden sich dadurch die linke Kette 112 und das linke Kettenblatt 102 nach hinten drehen. Das Rückwärtsdrehen des linken Kettenblatts 102 würde ein Rückwärtsdrehen des linken unteren Zahnrads 162 bewirken, was wiederum ein Vorwärtsdrehen des linken oberen Zahnrads 160 verursachen würde. Die obere Achse 140 würde sich dadurch nach vorn drehen. Dies ist jedoch nicht möglich, da die rechte Antriebsseite, wie oben beschrieben, ein Rückwärtsdrehen der oberen Achse 140 erzwingen will, so dass es zu einer Blockade kommt, das heißt das Vorderrad 26 kann nicht nach hinten gedreht werden. Man ist in diesem Fall also gezwungen, den Roller zu heben, wenn man ihn nach hinten bewegen möchte. Die Lösung des Problems besteht darin, die obere Achse 140 in zwei Achsen, rechte obere Achse 144 und linke obere Achse 146, aufzutrennen, die unabhängig voneinander gedreht werden können. Auf diese Weise wird es möglich, dass sich die rechte Seite des Antriebs (in der Abbildung auf der linken Seite), zum Beispiel rechter Pedalarm 92, rechtes Kettenblatt 100, rechte Kette 110, rechte obere Achse 144 etc. beim Rückwärtsdrehen des Vorderrads 26 nach hinten drehen. Die linke Antriebsseite (in der Abbildung auf der rechten Seite) würde beim Rückwärtsdrehen des Vorderrads 26 ein Vorwärtsdrehen der linken oberen Achse 146, wie oben beschrieben, verursachen. In diesem Fall ist dies möglich, da die linke obere Achse 146 unabhängig von der rechten oberen Achse 144 gedreht werden kann, die Blockade wie in Fig. 8B ist somit aufgehoben. Das obere Tretlagergehäuse 150 kann entweder wie in Fig. 8B bestehen bleiben, oder aber in 2 Tretlagergehäuse, rechtes oberes Tretlagergehäuse 154 und linkes oberes Tretlagergehäuse 156, aufgeteilt werden.

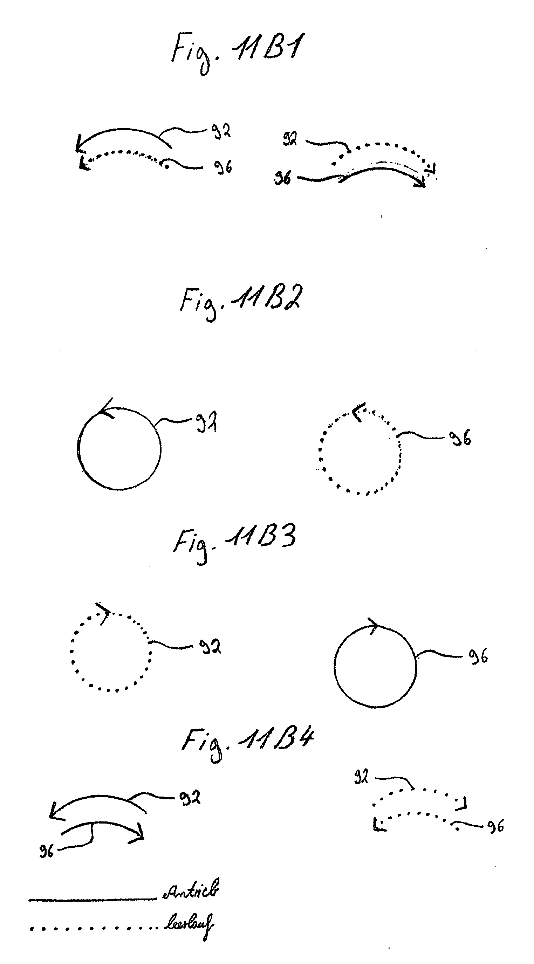

Nun ist es auch möglich, den Roller zu schieben, wenn man ihn nach hinten bewegen möchte. Alternativ kann dies auch dadurch erreicht werden, dass man das linke obere Zahnrad 160 vom linken unteren Zahnrad 162 entkoppelt, zum Beispiel durch den Einbau eines zusätzlichen Schiebmechanismus, um das linke obere Zahnrad 160 an der Achse entlang so zu verschieben, dass der Kontakt zum linken unteren Zahnrad 162 aufgehoben wird. Des Weiteren ist durch diese Konstruktion ein zusätzlicher Fahrstil möglich, dieser zusätzliche Fahrstil ist in Fig. 11B4 näher beschrieben.

Die Fig. 11B1 zeigt einen der möglichen Fahrstile in der Seitenansicht von links. Es stellt dar, dass durch eine Schwenkbewegung der Pedalarme 92, 96 nach vorn und nach hinten Antrieb erzeugt werden kann. Es ist dabei möglich, die Länge der Schwenkbewegung individuell zu bestimmen, das heißt der Nutzer des Rollers kann selbst bestimmen, wie weit er nach vorn oder nach hinten schwenken möchte. Des Weiteren ist es möglich, die Schwenkbewegung an jedem Teilabschnitt des Kurbelkreises zu vollführen, zum Beispiel halbkreisförmige Schwenkbewegungen nach vorn und nach hinten in der oberen Kurbelkreishälfte oder auch viertelkreisförmige Schwenkbewegungen in der unteren Kreishälfte. Der Antrieb findet beim Vorwärtsschwenken auf der rechten Seite statt, während auf der linken Seite Leerlauf vorherrscht. Beim Rückwärtsschwenken wird auf der linken Seite Antrieb erzeugt, und auf der rechten Seite des Rollers herrscht Leerlauf vor. Im Gegensatz zur Fig. 8E1 kann auf der rechten Seiten nur durch das Vorwärtsschwenken des rechten Pedalarms 92 in Fahrtrichtung Antrieb erzeugt werden, während das Vorwärtsschwenken des linken Pedalarms 96 auf Grund der getrennten Achse lediglich Leerlauf auf der linken Seite erzeugt. Auf der linken Seite gilt Ähnliches: Hier wird der Antrieb lediglich durch das Rückwärtsschwenken des linken Pedalarms 96 erzeugt, während das Rückwärtsschwenken des rechten Pedalarms 92 lediglich Leerlauf auf der rechten Seite verursacht. Durch die getrennten Achsen 144, 146 ist es möglich, die Pedalarme 92, 96 sowohl zeitgleich, als auch zeitversetzt zueinander zu schwenken.

Die Fig. 11B2 zeigt einen weiteren Fahrstil in der Seitenansicht von links. In diesem Fall ist eine vollständig kreisförmige Bewegung der Pedalarme 92, 96 nach vorn in Fahrtrichtung dargestellt, das heißt der Antrieb wird durch ein vollständig kreisförmiges Kurbeln nach vorn in Fahrtrichtung erzeugt. Hierbei wird der Roller ausschließlich auf der rechten Seite angetrieben, während auf der linken Seite Leerlauf vorherrscht. Im Gegensatz zur Fig. 8E2 kann hier nur durch das Vorwärtskurbeln des rechten Pedalarms 92 Antrieb erzeugt werden. Das Vorwärtskurbeln des linken Pedalarms 96 hat keine Auswirkung auf den Antrieb, sondern erzeugt lediglich auf der linken Seite Leerlauf, da die Achsen 144, 146 unabhängig voneinander arbeiten. Durch die getrennten Achsen 144, 146 ist es möglich, die Pedalarme 92, 96 sowohl zeitgleich, als auch zeitversetzt zueinander nach vorn in Fahrtrichtung zu kurbeln.

Die Fig. 11B3 zeigt einen zusätzlichen Fahrstil in der Seitenansicht von links. In diesem Fall wird eine vollständig kreisförmige Bewegung der Pedalarme 92, 96 nach hinten, entgegengesetzt der Fahrtrichtung vollzogen. Der Antrieb wird also durch eine kreisförmige Kurbelbewegung nach hinten entgegensetzt der Fahrtrichtung erzeugt. Hierbei findet Antrieb ausschließlich auf der linken Seite statt, während auf der rechten Seite Leerlauf vorherrscht. Es kann lediglich durch das Rückwärtskurbeln des linken Pedalarms 96 entgegengesetzt der Fahrtrichtung Antrieb erzeugt werden, während auf Grund der getrennten Achsen 144, 146 ein Rückwärtskurbeln des rechten Pedalarms 92 auf der rechten Seite lediglich Leerlauf erzeugt.

Fig. 11B4 zeigt einen weiteren Fahrstil in der Seitenansicht von links. Es ist möglich, beide Pedalarme 92, 96 gleichzeitig entgegengesetzt zu schwenken/kurbeln, wie bei einem "Stepper". So kann beim Vorwärtskurbeln des rechten Pedalarms 92 und gleichzeitigem Kurbeln des linken Pedalarms 96 nach hinten zeitgleich auf der linken und rechten Seite Antrieb erzeugt werden. Die Kurbelbewegungen können dabei entweder vollkommen kreisförmig sein oder aber teilkreisförmig ausgeführt werden. Das zeitgleiche Kurbeln des rechten Pedalarms 92 nach hinten entgegengesetzt der Fahrtrichtung und des linken Pedalarms 96 nach vorn in Fahrtrichtung erzeugt auf der jeweiligen Seite Leerlauf, es wird in diesem Fall also kein Antrieb erzeugt.

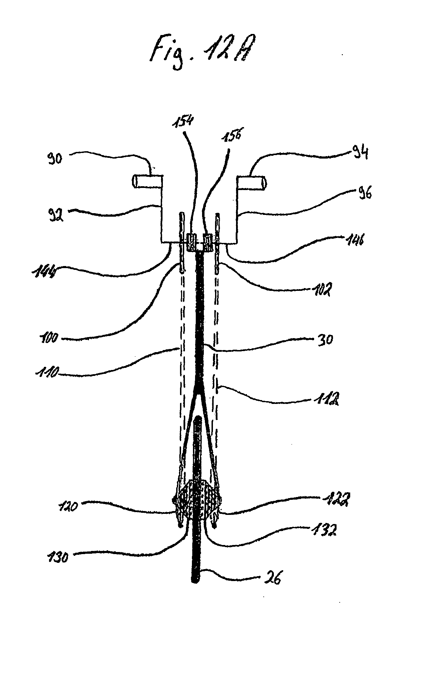

Die Fig. 12A zeigt eine weitere Rollervariante. Im Gegensatz zur Fig. 11A hat diese Anordnung keine weiteren Achsen als die rechte obere 144 und die linke obere Achse 146 (die untere Achse 142 in Fig. 11A fehlt). Weiterhin sind hier keine Zahnräder vorhanden (in Fig. 11A linkes oberes Zahnrad 160 und linkes unteres Zahnrad 162). Auf beiden Seiten sind hier herkömmliche Fahrradantriebe eingebaut, wobei auf der linken Seite (in der Abbildung rechts) ein Linksantrieb eingesetzt wird. Alle Bauteile des linken Antriebs sind spiegelverkehrt zu den Bauteilen des rechten Antriebs gebaut. Durch das Weglassen der Zahnräder 160, 162 wird in diesem Fall auf beiden Seiten jeweils durch das Vorwärtskurbeln der Pedalarme 92, 96 ein Antrieb nach vorn erzeugt, während ein Rückwärtskurbeln stets Leerlauf bewirkt, im Gegensatz zu den vorhergehenden Konstruktionen.

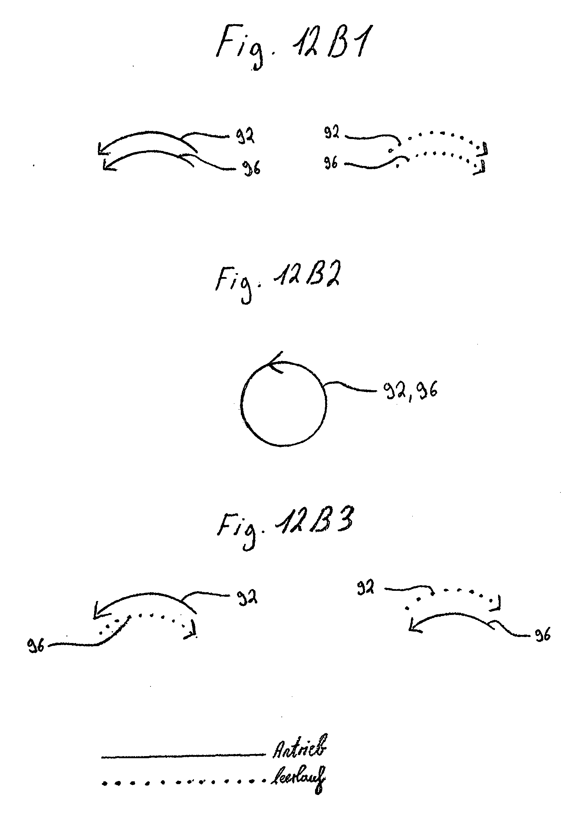

Die Fig. 12B1 zeigt einen der möglichen Fahrstile in der Seitenansicht von links. Es stellt dar, dass durch eine Schwenkbewegung der Pedalarme 92, 96 nach vorn in Fahrtrichtung Antrieb erzeugt werden kann. Es ist dabei möglich, die Länge der Schwenkbewegung individuell zu bestimmen, das heißt der Nutzer des Rollers kann selbst bestimmen, wie weit er nach vorn oder nach hinten schwenken möchte. Des Weiteren ist es möglich, die Schwenkbewegung an jedem Teilabschnitt des Kurbelkreises zu vollführen, zum Beispiel halbkreisförmige Schwenkbewegungen nach vorn und nach hinten in der oberen Kurbelkreishälfte, oder auch viertelkreisförmige Schwenkbewegungen in der unteren Kreishälfte. Der Antrieb wird hier durch das Vorwärtskurbeln beider Pedalarme 92, 96 nach vorn erreicht, während beim Rückwärtsschwenken beider Pedalarme 92, 96 entgegengesetzt der Fahrtrichtung auf der jeweiligen Seiten Leerlauf vorherrscht. Durch die getrennten Achsen 144, 146 ist es möglich, die Pedalarme 92, 96 sowohl zeitgleich, als auch zeitversetzt, zueinander zu schwenken.

Die Fig. 12B2 zeigt einen weiteren Fahrstil in der Seitenansicht von links. In diesem Fall ist eine vollständig kreisförmige Bewegung der Pedalarme 92, 96 nach vorn in Fahrtrichtung dargestellt, das heißt der Antrieb wird durch ein vollständig kreisförmiges Kurbeln nach vorn in Fahrtrichtung erzeugt. Hierbei wird der Roller auf beiden Seiten angetrieben, das heißt auf der rechten und auf der linken Seite findet zeitgleich Antrieb statt. Durch die getrennten Achsen 144, 146 ist es möglich, die Pedalarme 92, 96 sowohl zeitgleich, als auch zeitversetzt zueinander nach vorn in Fahrtrichtung zu kurbeln.

Fig. 12B3 zeigt einen weiteren Fahrstil in der Seitenansicht von links. Es ist möglich, beide Pedalarme 92, 96 gleichzeitig entgegengesetzt zu schwenken/kurbeln, wie bei einem "Stepper" beziehungsweise Crosstrainer. Dabei wird stets auf der Seite Antrieb erzeugt, auf der der Pedalarm nach vorn in Fahrtrichtung gekurbelt wird. Auf der Seite, auf der ein Rückwärtsschwenken entgegen der Fahrtrichtung stattfindet, herrscht Leerlauf vor. Die Kurbelbewegungen können entweder als komplett kreisförmig oder als teilkreisförmig erfolgen. Im Vergleich zur Fig. 11B4 bietet Fig. 12B3 die Möglichkeit, bei diesem Fahrstil stets Antrieb zu erzeugen, da immer ein Pedalarm nach vorn gekurbelt oder geschwenkt wird. Dafür ist es mit dieser Konstruktion, im Gegensatz zu den vorherigen Konstruktionen, nicht möglich, durch Rückwärtskurbeln entgegengesetzt der Fahrtrichtung Antrieb zu erzeugen.

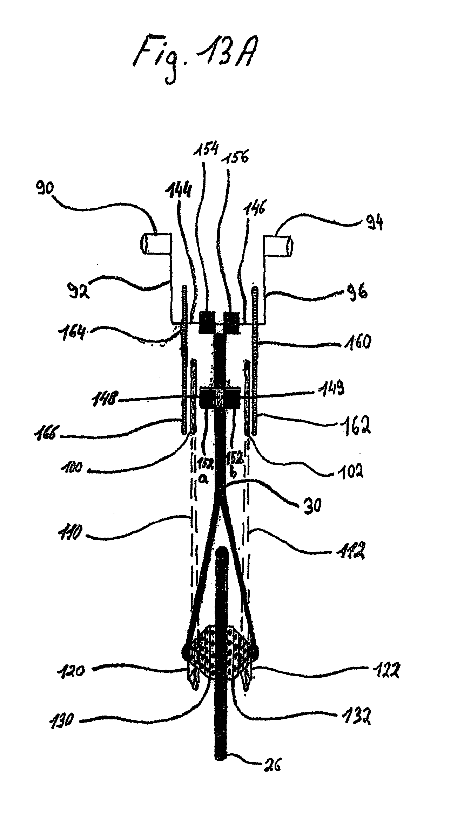

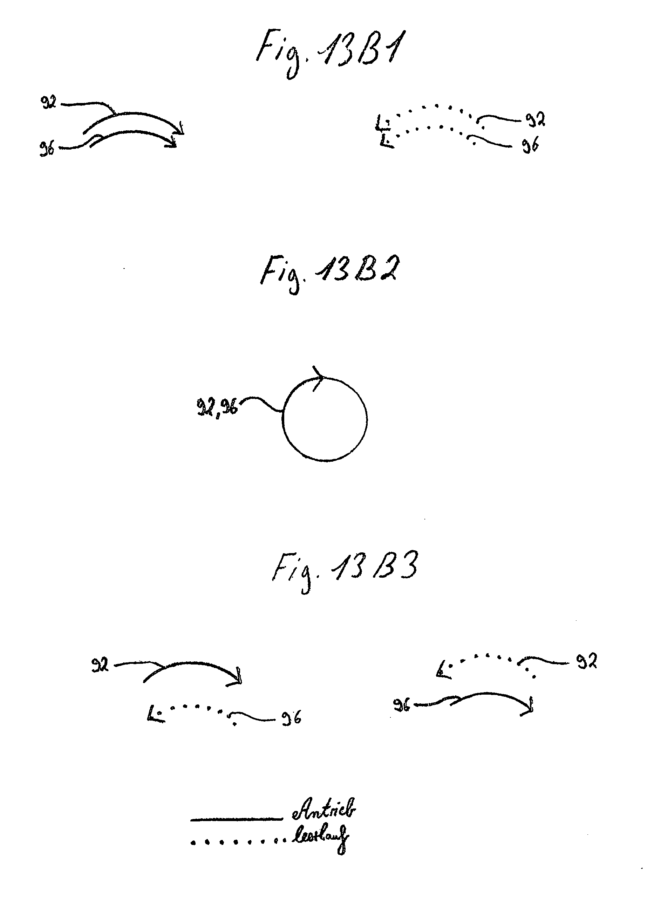

Die Fig. 13A zeigt eine weitere Rollervariante. Im Gegensatz zur Variante gemäß Fig. 12A wurden noch folgende Zahnräder integriert: linkes oberes Zahnrad 160, linkes unteres Zahnrad 162, rechtes oberes Zahnrad 164 und rechtes unteres Zahnrad 166. Zudem wurde noch die untere Achse 142 in zwei voneinander unabhängige Achsen, rechte untere Achse 148 und linke untere Achse 149, aufgeteilt. Es findet durch den Einbau dieser Zahnräder eine Umkehrung des Antriebs im Vergleich zur Fig. 12A statt: Antrieb wird nun durch das Rückwärtskurbeln der Pedalarme 92, 96 erzeugt. Die Fahrstile der Fig. 12A bleiben weitestgehend erhalten, lediglich mit dem Unterschied, dass nur bei einem Rückwärtskurbeln Antrieb erzeugt wird. Durch die Aufteilung der unteren Achse 142 in zwei voneinander unabhängig drehende Achsen, rechte untere Achse 148 und linke untere Achse 149, und des unteren Tretlagergehäuses 152, in rechtes unteres Tretlagergehäuse 152a und linkes unteres Tretlagergehäuse 152b, kommt es weder bei den unteren Achsen 148, 149, noch bei den unteren Tretlagergehäusen 152a, 152b beim entgegensetzten Kurbeln oder Schwenken der Pedalarme 92, 96 zu einer Blockade. Alternativ kann man bei dieser Rollervariante auch auf das Antriebsmittel der linken Seite (in der Abbildung rechts) verzichten und, wie in Fig. 8B, die obere Achse 140 und untere Achse 142 nicht trennen. Diese Variante hätte den Nachteil, dass der Fahrstil wie bei einem "Crosstrainer" gemäß Figur 13B3 entfällt.

Die Fig. 13B1 zeigt einen der möglichen Fahrstile in der Seitenansicht von links. Sie stellt dar, dass durch eine Schwenkbewegung der Pedalarme 92, 96 nach hinten entgegengesetzt der Fahrtrichtung Antrieb erzeugt werden kann. Es ist dabei möglich, die Länge der Schwenkbewegung individuell zu bestimmen, das heißt der Nutzer des Rollers kann selbst bestimmen, wie weit er nach vorn oder nach hinten schwenken möchte. Des Weiteren ist es möglich, die Schwenkbewegung an jedem Teilabschnitt des Kurbelkreises zu vollführen, zum Beispiel halbkreisförmige Schwenkbewegungen nach vorn und nach hinten in der oberen Kurbelkreishälfte, oder auch viertelkreisförmige Schwenkbewegungen in der unteren Kreishälfte. Der Antrieb wird hier durch das Rückwärtsschwenken beider Pedalarme 92, 96 entgegengesetzt der Fahrtrichtung erreicht, während beim Vorwärtsschwenken beider Pedalarme 92, 96 in Fahrtrichtung auf den jeweiligen Seiten Leerlauf vorherrscht. Durch die getrennten Achsen 144, 146 ist es möglich, die Pedalarme 92, 96 sowohl zeitgleich, als auch zeitversetzt zueinander zu schwenken.

Die Fig. 13B2 zeigt einen weiteren Fahrstil in der Seitenansicht von links. In diesem Fall ist eine vollständig kreisförmige Bewegung nach hinten entgegengesetzt der Fahrtrichtung dargestellt, das heißt der Antrieb wird durch ein vollständig kreisförmiges Kurbeln der Pedalarme 92, 96 nach hinten entgegengesetzt Fahrtrichtung erzeugt. Hierbei wird der Roller auf beiden Seiten angetrieben, das heißt auf der rechten und auf der linken Seite findet zeitgleich Antrieb statt. Durch die getrennten Achsen 144, 146 ist es möglich, die Pedalarme 92, 96 sowohl zeitgleich, als auch zeitversetzt zueinander nach hinten, entgegengesetzt der Fahrtrichtung zu kurbeln.

Fig. 13B3 zeigt einen weiteren Fahrstil in der Seitenansicht von links. Es ist möglich, beide Pedalarme 92, 96 gleichzeitig entgegengesetzt zu schwenken/kurbeln, wie bei einem "Stepper". Dabei wird stets auf der Seite Antrieb erzeugt, auf der der Pedalarm nach hinten, entgegengesetzt der Fahrtrichtung gekurbelt wird. Auf der Seite, auf der ein Vorwärtsschwenken in Fahrtrichtung stattfindet, herrscht Leerlauf vor. Die Kurbelbewegungen können entweder als komplett kreisförmig oder als teilkreisförmig erfolgen. Im Vergleich zur Fig. 11B4 bietet Fig. 13B3 die Möglichkeit, bei diesem Fahrstil stets Antrieb zu erzeugen, da immer ein Pedalarm nach hinten, entgegengesetzt der Fahrtrichtung gekurbelt oder geschwenkt wird. Dafür ist es mit dieser Konstruktion, im Gegensatz zu den vorherigen Konstruktionen, nicht möglich, durch Vorwärtskurbeln in Fahrtrichtung Antrieb zu erzeugen.

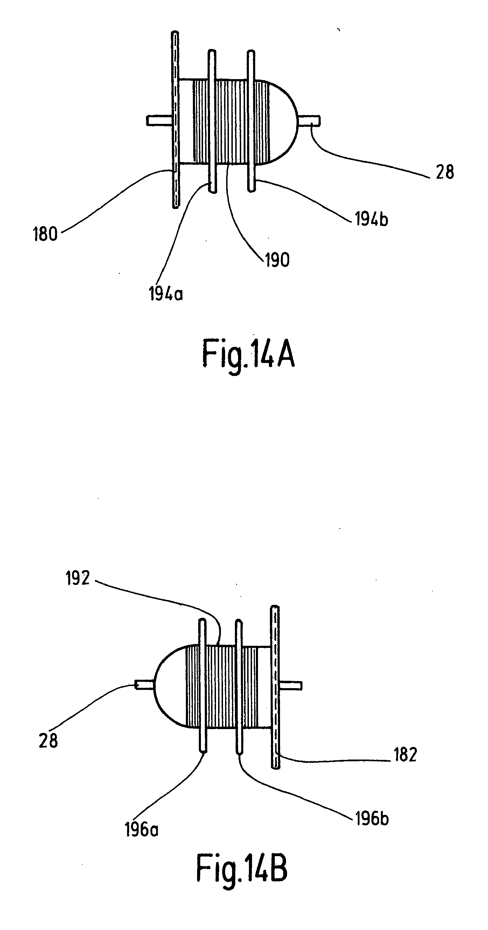

Fig. 14A zeigt eine Nabenkonstruktion mit der Vorderachse 28, einem rechten Zahnkranz 180 mit Rechtsantrieb (Nabenschaltung), eine rechte Nabe 190 mit integrierter Gangschaltung und Leerlauf, einem äußeren Speichenflansch 194a der rechten Nabe und einem inneren Speichenflansch 194b der rechten Nabe. Die Fig. 14A zeigt eine Nabe 190 mit integrierter Gangschaltung und Leerlauf und Zahnkranz. Der Antrieb funktioniert in diesem Fall wie bei einem Kettenantrieb mit Kettenschaltung, der Unterschied besteht lediglich darin, dass die Gangschaltung bereits in der Nabe 190 integriert ist und nicht durch den Einbau eines Zahnkranzpakets erreicht wird. Durch die Drehung des rechten Kettenblatts 100 und des rechten Zahnkranzes 180 nach vorn in Fahrtrichtung wird Antrieb erzeugt (Rechtsantrieb), während bei einer Drehung des rechten Kettenblatts 100 und des rechten Zahnkranzes 180 nach hinten, entgegen der Fahrtrichtung, Leerlauf erzeugt wird. Der Antrieb funktioniert also wie bei einem herkömmlichen Fahrrad mit Nabenschaltung und Leerlauf.

Fig. 14B zeigt eine analoge Konstruktion für die andere Seite mit dem linken Zahnkranz 182 mit Linksantrieb bei Nabenschaltung, der linken Nabe 192 mit integrierter Gangschaltung und Leerlauf, dem inneren Speichenflansch 196a, der linken Nabe und dem äußeren Speichenflansch 196b der linken Nabe.

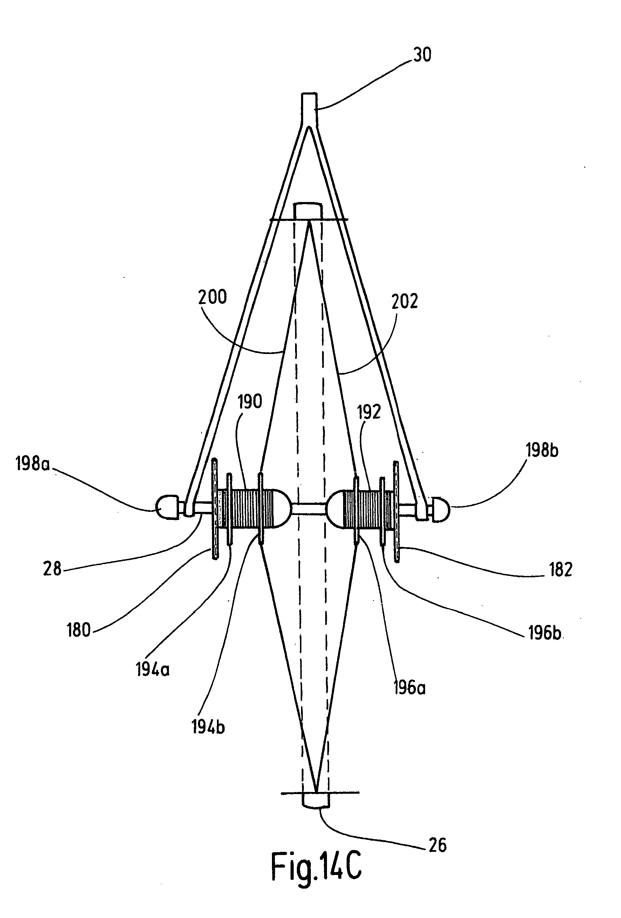

Fig. 14C zeigt eine Antriebsvariante des Rollers. Das Vorderrad 26 wurde gestrichelt dargestellt. Der Antrieb dieser Konstruktion funktioniert wie der Antrieb gemäß der Fig. 8B, lediglich mit dem Unterschied, das in diesem Fall anstatt Kettenschaltungen Nabenschaltungen eingesetzt wurden. Im Gegensatz zu den Konstruktionen mit Kettenschaltungen, sind bei der Konstruktion mit Nabenschaltungen zwei Naben mit integrierter Schaltung und Leerlauf 190, 192 notwendig. Da beim Einsatz von 2 Naben 4 Speichenflansche 194a, 194b, 196a und 196b vorhanden sind, bleiben 2 Speichenflansche ungenutzt, in unserem Fall die Speichenflansche 194a und 196b. Diese werden auch für die weiteren Konstruktionen nicht benötigt. Das Vorderrad 26 ist durch die rechten Speichen 200 mit dem inneren Speichenflansch der rechten Nabe 194b und damit auch mit der rechten Nabe 190 verbunden (in der Abbildung links). Auf der linken Seite ist das Vorderrad 26 über die linken Speichen 202 mit dem inneren Speichenflansch der linken Nabe 196a und damit auch mit der linken Nabe 192 verbunden (in der Abbildung rechts). Fig. 14C zeigt die rechte Verschlusskappe 198a und die linke Verschlusskappe 198b. Der Antrieb funktioniert analog zu der Zahnkranzpaket-Konstruktion.

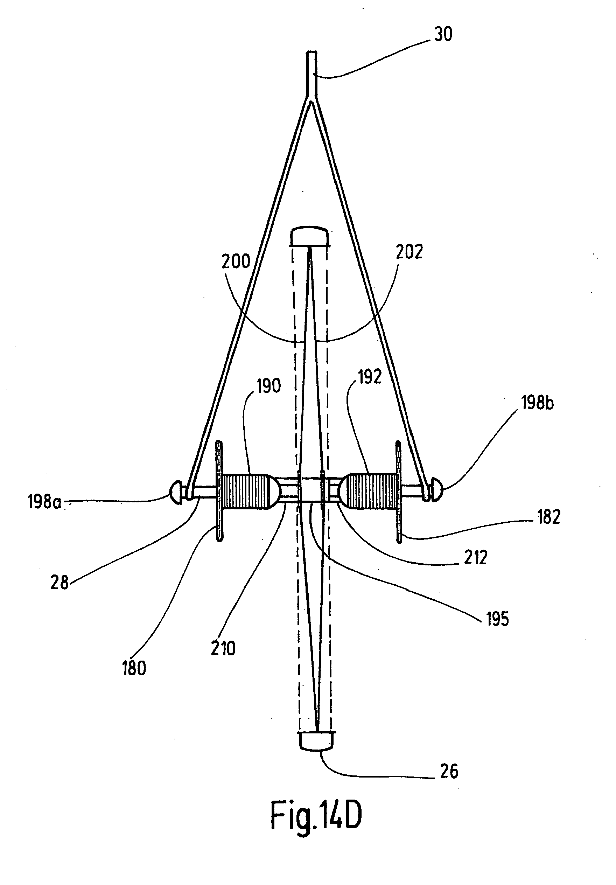

Eine weitere Möglichkeit, den Antrieb des Vorderrads 26 sicherzustellen, besteht darin, die Ausführungsform gemäß Fig. 14C so zu ändern, wie in Fig. 14D dargestellt ist. Bei dieser Konstruktion besitzt das Vorderrad 26 eine eigene, zentrale Nabe 195, die durch die Speichen 200, 202 mit dem Vorderrad 26 verbunden ist. Diese zentrale Nabe 195 ist auf der rechten Seite (in der Abbildung links) durch das Verbindungsstück 210 zwischen rechter und zentraler Nabe mit dem Gehäuse der rechten Nabe 190 und auf der linken Seite durch das Verbindungsstück 212 zwischen linker und zentraler Nabe mit dem Gehäuse der linken Nabe 192 (in der Abbildung rechts) verbunden. Die rechte Nabe 190 treibt im Falle eines Antriebs durch das Verbindungsstück 210 zwischen rechter und zentraler Nabe die zentrale Nabe 195, die durch beide Flansche mit dem Vorderrad 26 verbunden ist, an. Da die zentrale Nabe 195 durch beide Flansche mit dem Vorderrad 26 verbunden ist, wird die Antriebswirkung in diesem Fall auf beide Speichen 200, 202 gleichmäßig übertragen.

Für die linke Seite gilt Ähnliches. Die linke Nabe 192 überträgt im Falle eines Antriebs die Antriebswirkung durch das Verbindungsstück 212 zwischen linker und zentraler Nabe auf die zentrale Nabe des Vorderrads 195, die dann über beide Flansche und beide Speichenseiten 200, 202 das Vorderrad 26 antreibt. Mit dieser Konstruktion ist es auch möglich, auf die Speichenflansche 194a, 194b, 196a und 196b der rechten und linken Nabe 190, 192 zu verzichten. Die Anordnung umfasst ein Verbindungsstück 210 zwischen rechter und zentraler Nabe und ein Verbindungsstück 212 zwischen linker und zentraler Nabe.

Anstelle dieser Konstruktion gemäß der Fig. 14D wäre es auch möglich, die rechte Nabe 190 und die linke Nabe 192 so auszuführen, dass beide ein gemeinsames Gehäuse besitzen. Die zentrale Nabe 195 des Vorderrads 26 wird hierbei nicht benötigt. Zu beachten ist dabei, dass beide innere Nabenmechanismen weiterhin unabhängig voneinander funktionieren. Das gemeinsame Gehäuse verfügt in der Mitte über zwei Speichenflansche, die jeweils über die Speichen 200, 202 mit dem Vorderrad 26 verbunden sind. Das Gehäuse würde im Falle eines Antriebs auf der rechten Seite durch die Verbindung mit dem inneren Mechanismus der ursprünglichen rechten Nabe 190 Antrieb haben. Da dieses Gehäuse über beide Flansche und Speichen 200, 202 mit dem Vorderrad 26 verbunden ist, ist die Lastenverteilung über beide Seiten der Speichen 200, 202 gleichmäßig. Auf der linken Seite gilt Ähnliches. Im Falle eines Antriebs würde der linke innere Mechanismus der ursprünglichen linken Nabe 192 das Gehäuse antreiben. Das Gehäuse würde auch in diesem Fall das Vorderrad 26 über beide Flansche und Speichenseiten 200, 202 antreiben, auch hierbei würde sich die Antriebswirkung gleichmäßig auf beide Speichen 200, 202 verteilen.

Es kommt bei dieser Konstruktion niemals zu einer Blockade, da die inneren Nabenmechanismen der beiden Seiten so aufgebaut sind, dass sich immer lediglich eine Seite im Antrieb befindet und das gemeinsame Gehäuse antreibt, während sich die andere Seite jeweils im Leerlauf befindet und dabei vom Gehäuse entkoppelt ist.

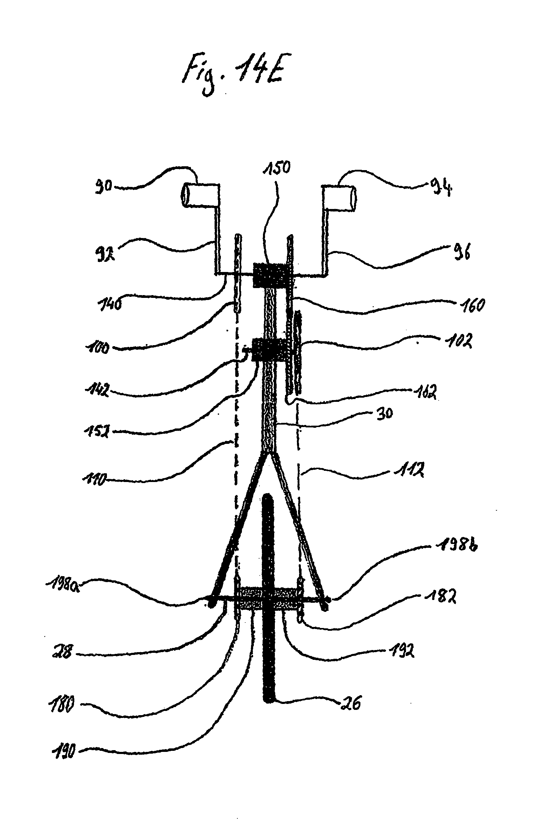

Die Fig. 14E zeigt den Roller mit den Nabenschaltungen nach der Konstruktion gemäß Fig. 14D. Der Antrieb dieser Konstruktion funktioniert auf dieselbe Weise wie der Antrieb gemäß der Fig. 8B, mit dem Unterschied, dass in diesem Fall mit Nabenschaltungen gearbeitet wird und daher unter anderem 2 Naben mit integrierter Schaltung und Leerlauf 190, 192 zum Einsatz kommen. Wie in Fig. 8B gezeigt ist, bewirkt also ein Vorwärtskurbeln der Pedalarme 92, 96 einen Antrieb auf der rechten Seite des Rollers (in der Abbildung links). Die rechte Nabe 190 treibt dabei die zentrale Nabe des Vorderrads (195, nicht eingezeichnet) an und dadurch auch das Vorderrad 26. Die linke Nabe 192 befindet sich hierbei im Leerlauf. Beim Rückwärtskurbeln der Pedalarme 92, 96 findet Antrieb auf der linken Seite (in der Abbildung rechts) statt und die linke Nabe 192 treibt in diesem Fall die zentrale Nabe 195 und somit auch das Vorderrad 26 an. Diese Anordnung umfasst eine rechte Verschlusskappe 198a, eine linke Verschlusskappe 198b, ein Verbindungsstück 210 zwischen rechter und zentraler Nabe und ein Verbindungsstück 212 zwischen linker und zentraler Nabe.

An dieser Stelle ist noch zu erwähnen, dass alle Konstruktionen und Fahrstile, die wir mit Kettenschaltungen darstellen, ebenfalls mit Nabenschaltungen möglich sind. Zu beachten ist, dass die Naben mit integrierter Schaltung und Leerlauf 190, 192 stets wie in der Konstruktion gemäß der Fig. 14D einzubauen sind. Die Unterschiede der verschiedenen Konstruktionen betreffen lediglich die oberen Bauteile des Rollers.

Eine Ausnahme bildet die nicht von der Erfindung umfasste Ausführungsvariante gemäß der Fig. 8AI. In diesem Fall würde nicht die Konstruktion gemäß der Fig. 14D zum Einsatz kommen, sondern lediglich eine herkömmliche Zentrale Nabe mit integrierter Schaltung und Leerlauf wie bei einem herkömmlichen Fahrrad mit Nabenschaltung und Leerlauf.

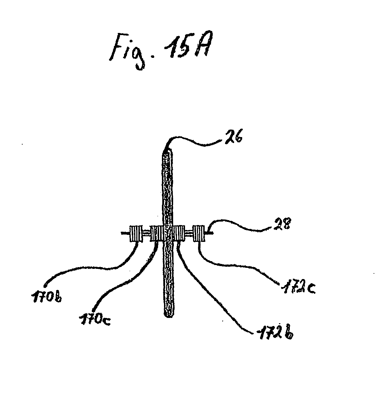

Die Fig. 15A zeigt eine Nabe mit vier Gewinden für die Montage von 4 verschiedenen Zahnkränzen. In der Abbildung ganz links ist das äußere Rechtsgewinde der rechten Seite der Nabe 170b abgebildet. Etwas weiter rechts davon ist das innere Rechtsgewinde der rechten Seite der Nabe 170c dargestellt. Links vom Rad (in der Abbildung rechts) ist zuerst das innere Linksgewinde der linken Seite der Nabe 172b abgebildet, ganz außen ist das äußere Linksgewinde der linken Seite der Nabe 172c eingezeichnet. Die Nabe besteht aus einem Stück, das heißt alle Gewinde 170b, 170c, 172b, 172c sind fest miteinander verbunden. Diese Nabe ist zudem durch Speichen 200,202 mit dem Vorderrad 26 verbunden. In der Mitte befindet sich, wie bei einem herkömmlichen Fahrrad, die Vorderachse 28, die starr ist und sich nicht mitdreht.

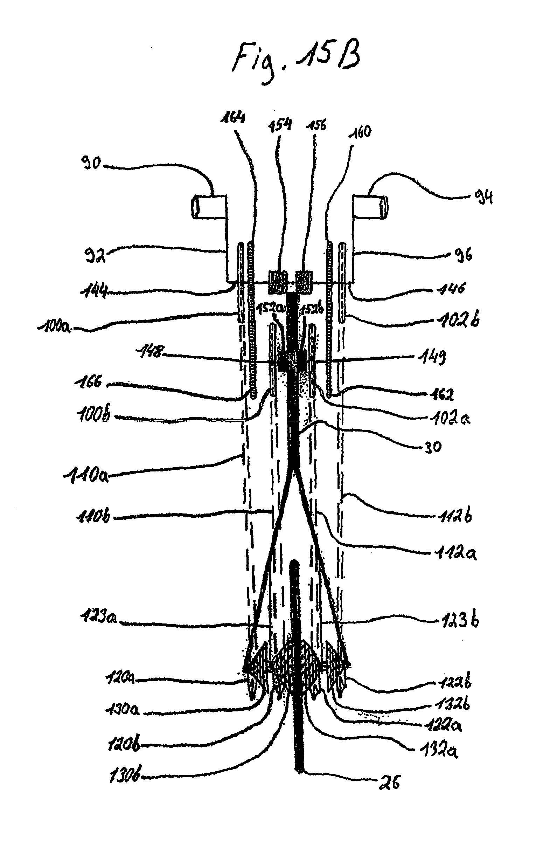

Die Variante gemäß Fig. 15B umfasst ein rechtes oberes Kettenblatt 100a, ein rechtes unteres Kettenblatt 100b, ein linkes unteres Kettenblatt 102a, ein linkes oberes Kettenblatt 102b, eine rechte äußere Kette 110a, eine rechte innere Kette 110b, eine linke innere Kette 112a, eine linke äußere Kette 112b, ein rechtes äußeres Schaltwerk 120a mit Kettenspannelement, ein rechtes inneres Schaltwerk 120b mit Kettenspannelement, ein linkes inneres Schaltwerk_122a mit Kettenspannelement, ein linkes äußeres Schaltwerk 122b mit Kettenspannelement, eine Halterung 123a für ein rechtes inneres Schaltwerk 120b mit Kettenspannelement, eine Halterung 123b für ein linkes inneres Schaltwerk 122a mit Kettenspannelement, ein rechtes äußeres Zahnkranzpaket 130a mit Rechtsgewinde und Rechtsantrieb, ein rechtes inneres Zahnkranzpaket 130b mit Rechtsgewinde und Rechtsantrieb, ein linkes inneres Zahnkranzpaket 132a mit Linksgewinde und Linksantrieb, ein linkes äußeres Zahnkranzpaket 132b mit Linksgewinde und Linksantrieb, eine rechte obere Achse 144, eine linke obere Achse 146, eine rechte untere Achse 148, eine linke untere Achse 149, ein rechtes unteres Tretlagergehäuse 152a, ein linkes unteres Tretlagergehäuse 152b, ein rechtes oberes Tretlagergehäuse 154, ein linkes oberes Tretlagergehäuse 156, ein linkes oberes Zahnrad 160, ein linkes unteres Zahnrad 162, ein rechtes oberes Zahnrad 164 und ein rechtes unteres Zahnrad 166.

Fig. 15B zeigt eine weitere Ausführungsform. Das Vorwärtsschwenken des rechten Pedalarms (92, in der Abbildung links) verursacht eine Rechtsdrehung des rechten oberen Kettenblatts 100a (in der Abbildung links) nach vorn in Fahrtrichtung. Dadurch wird eine Rechtsdrehung des rechten äußeren Zahnkranzpakets mit Rechtsgewinde und Rechtsantrieb 130a (in der Abbildung links) nach vorn in Fahrtrichtung bewirkt. Durch den Rechtsantrieb wird die Vorderradnabe, die durch die Speichen 200, 202 fest mit dem Vorderrad 26 verbunden ist, nach vorn in Fahrtrichtung angetrieben und das Vorderrad 26 wird daher ebenfalls nach vorn in Fahrtrichtung angetrieben. Ein Vorwärtsschwenken des rechten Pedalarms 92 bewirkt also zum einen eine Beschleunigung des Vorderrads 26 und damit des Rollers nach vorn in Fahrtrichtung. Zum anderen bewirkt das Vorwärtsschwenken des rechten Pedalarms 92 ein Vorwärtsdrehen des rechten oberen Zahnrads 164. Das obere rechte Zahnrad 164 ist, wie das rechte obere Kettenblatt 100a, fest mit der drehbaren rechten oberen Achse 144 verbunden. Wie bereits in Fig. 7A dargestellt, bewirkt das Drehen eines Zahnrads eine Drehung eines anderen, verzahnten Zahnrads in entgegengesetzter Richtung. In diesem Fall bewirkt also das Vorwärtsdrehen des rechten oberen Zahnrads 164 nach vorn in Fahrtrichtung eine Drehung des rechten unteren Zahnrads 166 entgegengesetzt der Fahrtrichtung. Das rechte untere Zahnrad 166 ist hier fest mit der rechten unteren Achse 148 verbunden, ebenso das rechte untere Kettenblatt 100b. Das Drehen des rechten unteren Zahnrads 166 entgegengesetzt der Fahrtrichtung bewirkt also ein Rückwärtsdrehen der rechten unteren Achse 148 und durch die feste Verbindung auch ein Rückwärtsdrehen des rechten unteren Kettenblatts 100b entgegengesetzt der Fahrtrichtung. Das rechte untere Kettenblatt 100b ist durch die rechte innere Kette 110b mit dem rechten inneren Zahnkranzpaket mit Rechtsgewinde und Rechtsantrieb 130b verbunden und erzeugt beim Rückwärtsdrehen ebenfalls eine Drehung des rechten inneren Zahnkranzpakets mit Rechtsgewinde und Rechtsantrieb 130b entgegengesetzt der Fahrrichtung (Drehrichtung links). Aufgrund des Rechtsantriebs findet in diesem Fall Leerlauf statt.

Zusammengefasst erzeugt ein Vorwärtskurbeln des rechten Pedalarms 92 über das rechte äußere Zahnkranzpaket mit Rechtsgewinde und Rechtsantrieb 130a einen Antrieb des Vorderrads 26 in Fahrtrichtung, während das rechte innere Zahnkranzpaket mit Rechtsgewinde und Rechtsantrieb 130b nach hinten entgegengesetzt der Fahrtrichtung gedreht wird und sich im Leerlauf befindet.

Beim Rückwärtsschwenken des rechten Pedalarms 92 (in der Abbildung links) entgegen der Fahrtrichtung wird das rechte obere Kettenblatt 100a (in der Abbildung links) nach hinten entgegengesetzt der Fahrtrichtung gedreht. Dies bewirkt, dass das rechte äußere Zahnkranzpaket mit Rechtsgewinde und Rechtsantrieb 130a (in der Abbildung links) ebenfalls nach hinten entgegengesetzt der Fahrtrichtung gedreht wird. Es herrscht hierbei durch den Rechtsantrieb Leerlauf und das Vorderrad 26 wird nicht durch das rechte äußere Zahnkranzpaket mit Rechtsgewinde und Rechtsantrieb 130a nach vorn angetrieben.

Das Rückwärtsschwenken des rechten Pedalarms 92 bewirkt jedoch auch, dass das rechte obere Zahnrad 164 rückwärts entgegengesetzt der Fahrtrichtung gedreht wird, wodurch sich das verzahnte rechte untere Zahnrad 166 und das ebenfalls starr mit der rechten unteren Achse 148 verbundene rechte untere Kettenblatt 100b nach vorn in Fahrtrichtung drehen. Das Vorwärtsdrehen des rechten unteren Kettenblatts 100b nach vorn in Fahrtrichtung bewirkt, dass das rechte innere Zahnkranzpaket mit Rechtsgewinde und Rechtsantrieb 130b nach vorn in Fahrtrichtung gedreht wird. Durch den Rechtsantrieb findet hier ein Antrieb statt und das rechte innere Zahnkranzpaket mit Rechtsgewinde und Rechtsantrieb 130b treibt das Vorderrad 26 und somit auch den Roller nach vorn in Fahrtrichtung an.

Der Antrieb auf der linken Seite des Rollers (in der Abbildung rechts dargestellt) ist analog zur rechten Seite, lediglich mit dem Unterschied, dass die Funktionen spiegelverkehrt sind, zum Beispiel kommen hier das linke innere und das linke äußere Zahnkranzpaket mit Linksgewinde und Linksantrieb 132a + 132b zum Einsatz, anstelle des rechten inneren und des rechten äußeren Zahnkranzpakets mit Rechtsgewinde und Rechtsantrieb 130a + 130b auf der rechten Seite.

Ein Vorwärtskurbeln des linken Pedalarms 96 (in der Abbildung rechts) bewirkt, dass das linke obere Kettenblatt 102b nach vorn in Fahrtrichtung gedreht wird. Dies wiederum bewirkt, dass das linke äußere Zahnkranzpaket mit Linksgewinde und Linksantrieb 132b ebenfalls nach vorn in Fahrtrichtung gedreht wird (Drehrichtung links). Durch den Linksantrieb wird das Vorderrad 26 und somit auch der Roller nach vorn angetrieben. Ein Vorwärtskurbeln des linken Pedalarms 96 bewirkt ein Rückwärtsdrehen des inneren Zahnkranzpakets, hier linkes inneres Zahnkranzpaket mit Linksgewinde und Linksantrieb 132a, entgegengesetzt der Fahrtrichtung (Drehrichtung rechts). Durch den Linksantrieb findet hier Leerlauf statt. Wie auf der rechten Seite des Rollers (in der Abbildung links) bewirkt ein Vorwärtskurbeln des Pedalarms, hier linker Pedalarm 96 (in der Abbildung rechts), also Antrieb durch das äußere Zahnkranzpaket, hier linkes äußeres Zahnkranzpaket mit Linksgewinde und Linksantrieb 132b, während beim linken inneren Zahnkranzpaket mit Linksgewinde und Linksantrieb 132a Leerlauf vorherrscht.

Das Rückwärtskurbeln des linken Pedalarms 96 (in der Abbildung rechts) bewirkt, dass das Vorderrad 26 durch das innere Zahnkranzpaket, hier linkes inneres Zahnkranzpaket mit Linksgewinde und Linksantrieb 132a, nach vorn angetrieben wird. Das äußere Zahnkranzpaket, hier das linke äußere Zahnkranzpaket mit Linksgewinde und Linksantrieb 132b, wird hingegen rückwärts entgegen der Fahrtrichtung gedreht (Drehrichtung rechts) und befindet sich im Leerlauf. Die Mechanismen funktionieren wie auf der rechten Seite, lediglich spiegelverkehrt.

Durch getrennte Achsen (Rechte obere Achse 144, Linke obere Achse 146, Rechte untere Achse 148, Linke untere Achse 149), die unabhängig voneinander funktionieren, das heißt zur gleichen Zeit andere Drehrichtungen haben können, kommt es bei den Achsen zu keiner Zeit zu einer Blockade.

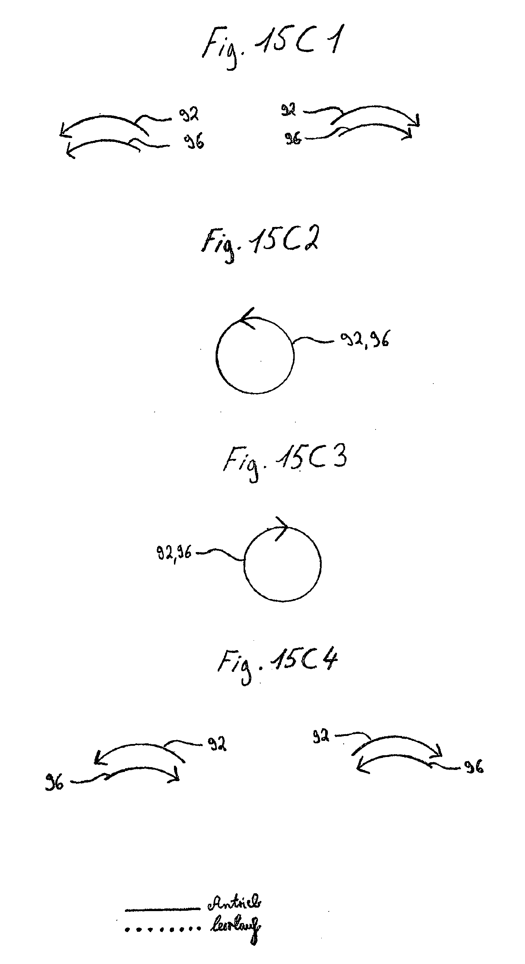

Die Fig. 15C1 zeigt einen der möglichen Fahrstile in der Seitenansicht von links. Es stellt dar, dass durch eine Schwenkbewegung nach vorn und nach hinten Antrieb erzeugt werden kann. Es ist dabei möglich, die Länge der Schwenkbewegung individuell zu bestimmen, das heißt der Nutzer des Rollers kann selbst bestimmen, wie weit er nach vorn oder nach hinten schwenken möchte. Des Weiteren ist es möglich, die Schwenkbewegung an jedem Teilabschnitt des Kurbelkreises zu vollführen, zum Beispiel halbkreisförmige Schwenkbewegungen nach vorn und nach hinten in der oberen Kurbelkreishälfte oder auch viertelkreisförmige Schwenkbewegungen in der unteren Kreishälfte. Der Antrieb findet beim Vorwärtsschwenken in Fahrtrichtung sowohl auf der rechten als auch auf der linken Seite statt, dies gilt auch für das Rückwärtsschwenken entgegengesetzt der Fahrtrichtung. Es findet also im Gegensatz zu den bisherigen Konstruktionen bei jeder Schwenkrichtung Antrieb auf beiden Seiten statt. Durch getrennte Achsen 144, 146, 148, 149 funktioniert der Antrieb auf beiden Seiten unabhängig voneinander und es ist möglich, die Pedalarme 92, 96 sowohl zeitgleich, als auch zeitversetzt zueinander zu schwenken.

Die Fig. 15C2 zeigt einen weiteren Fahrstil in der Seitenansicht von links. In diesem Fall ist eine vollständig kreisförmige Bewegung nach vorn in Fahrtrichtung dargestellt, das heißt der Antrieb wird durch ein vollständig kreisförmiges Kurbeln nach vorn in Fahrtrichtung erzeugt. Hierbei wird der Roller zeitgleich auf beiden Seiten angetrieben. Durch getrennte Achsen 144, 146, 148, 149 funktioniert der Antrieb auf beiden Seiten unabhängig voneinander, und es ist möglich, die Pedalarme 92, 96 sowohl zeitgleich, als auch zeitversetzt zueinander nach vorn zu kurbeln.

Die Fig. 15C3 zeigt einen zusätzlichen Fahrstil in der Seitenansicht von links. In diesem Fall wird eine vollständig kreisförmige Bewegung nach hinten entgegengesetzt der Fahrtrichtung vollzogen. Der Antrieb wird also durch eine kreisförmige Kurbelbewegung nach hinten, entgegensetzt der Fahrtrichtung erzeugt. Hierbei wird der Roller zeitgleich auf beiden Seiten angetrieben. Durch getrennte Achsen 144, 146, 148, 149 funktioniert der Antrieb auf beiden Seiten unabhängig voneinander, und es ist möglich, die Pedalarme 92, 96 sowohl zeitgleich als auch zeitversetzt zueinander nach hinten zu kurbeln.

Fig. 15C4 zeigt einen weiteren Fahrstil in der Seitenansicht von links. Es ist möglich, beide Pedalarme 92, 96 gleichzeitig entgegengesetzt zu schwenken/kurbeln, wie bei einem "Stepper". So kann beim Vorwärtskurbeln des rechten Pedalarms 92 und gleichzeitigem Kurbeln des linken Pedalarms 96 nach hinten zeitgleich auf der linken und rechten Seite Antrieb erzeugt werden. Ebenso erzeugt das gleichzeitige Rückwärtsschwenken des rechten Pedalarms 92 entgegengesetzt der Fahrtrichtung und das Vorwärtsschwenken des linken Pedalarmes 96 in Fahrtrichtung sowohl auf der rechten als auch auf der linken Seite zeitgleich Antrieb. Durch getrennte Achsen 144, 146, 148, 149 funktioniert der Antrieb auf beiden Seiten unabhängig voneinander. Im Gegensatz zu den vorherigen Konstruktionen ermöglicht die Fig. 15B also bei jedem Schwenken beider Pedalarme 92, 96 in entgegengesetzten Richtungen Antrieb auf beiden Seiten. Die Kurbelbewegungen können dabei entweder vollkommen kreisförmig sein oder aber teilkreisförmig ausgeführt werden.

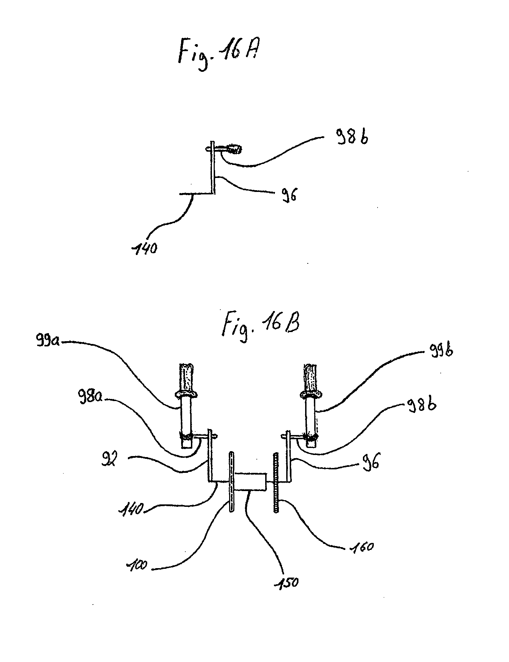

Fig. 16 A zeigt eine Ausführungsform mit einem linken Pedalarm 96, einer linken Kurbelverbindungsstange 98b mit Halterung für die Kurbelverlängerungsstange 99b und eine obere Achse 140. Die Fig. 16A zeigt eine Konstruktion zur Verlängerung des Pedalarms 96. Zusätzlich zum linken Pedalarm 96, der direkt mit der oberen Achse 140 verbunden ist, wird eine Verbindungsstange zur Aufnahme einer Kurbelverlängerung eingesetzt, in diesem Fall ist es die linke Kurbelverbindungsstange 98b mit Halterung für die Kurbelverlängerungsstange 99b. Diese Kurbelverbindungsstange 98b ist dabei drehbar mit dem linken Pedalarm 96 verbunden und mit einer Halterung mit Arretierungsfunktion ausgestattet. Es ist mit dieser Halterung möglich, an verschiedenen Stellen der Kurbelverlängerungsstange, hier die linke Kurbelverlängerungsstange mit Griff 99b, eine Arretierung vorzunehmen, so dass die Verlängerungswirkung der Kurbelverlängerungsstange 99b stufenlos eingestellt werden kann.

Fig. 16B zeigt eine Ausführungsform mit einem rechten Pedalarm 92 (rechte Tretkurbel), einem linken Pedalarm 96 (linke Tretkurbel), einer rechten Kurbelverbindungsstange 98a mit Halterung für die Kurbelverlängerungsstange 99a, einer linken Kurbelverbindungsstange 98b mit Halterung für die Kurbelverlängerungsstange 99b, einer rechten Kurbelverlängerungsstange 99a mit einem Griff, einer linken Kurbelverlängerungsstange 99b mit einem Griff, einem rechten Kettenblatt 100, einer oberen Achse 140, einem oberen Tretlagergehäuse 150 und einem linken oberen Zahnrad 160.

Die Fig. 16B zeigt eine Ausführungsform, die es erlaubt, die kreisförmige Kurbelbewegung von einem höheren Standpunkt aus ausführen. Zur Vereinfachung wurden lediglich die betreffenden Bauteile dargestellt, andere Bauteile wie etwa Lenkstange 30, Vorderrad 26 etc. wurden zeichnerisch weggelassen. Anstatt der rechten und linken Pedale 90, 94 wurden bei dieser Konstruktion eine linke und eine rechte Kurbelverbindungsstange eingesetzt 98a, 98b, die jeweils über eine Halterung für die Kurbelverlängerungsstangen 99a, 99b verfügen. Wie bereits in der Fig. 16A beschrieben, sind diese Kurbelverbindungsstangen 98a, 98b drehbar an den Pedalarmen 92, 96 befestigt. An den Halterungen werden die linke und die rechte Kurbelverlängerungsstangen 99a, 99b mit Griff befestigt. Es ist hierbei eine stufenlose Befestigung möglich, das heißt die Verlängerungswirkung ist innerhalb einer bestimmten Länge stufenlos einstellbar. Mit Hilfe dieser Konstruktion ist es möglich, dass der Antrieb des Rollers von einer höheren Position aus ausgeführt wird. Der Antrieb findet statt, indem der Nutzer des Rollers eine Kurbelbewegung an den Griffen der rechten und linken Kurbelverlängerungsstangen 99a, 99b ausführt. Durch die drehbare Befestigung der Kurbelverbindungsstangen 98a, 98b an den Pedalarmen 92, 96, können die Griffe der Kurbelverlängerungsstangen während der Kurbelbewegung stets oben gehalten werden und der Nutzer ist nicht gezwungen, bei einer komplett kreisförmigen Kurbelbewegung einen Kreis mit dem vollen Radius (Pedalarm + Kurbelverlängerungsstange) auszuführen. Stattdessen muss der Nutzer lediglich eine Kreisbewegung mit kleinerem Radius und von einer erhöhten Position aus ausführen. Die genaue Höhe ist dabei variabel an den Halterungen der Kurbelverbindungsstangen 98a, 98b einstellbar. Die Kurbelbewegung an den Kurbelverlängerungsstangen 99a, 99b wird durch die Kurbelverbindungsstangen 98a, 98b auf die Pedalarme 92, 96 übertragen. Die Pedalarme 92, 96 beschreiben hierbei dieselbe kreisförmige Kurbelbewegung, die ebenfalls ausgeführt wird, wenn der Nutzer des Rollers die Kurbelbewegung in den vorherigen Konstruktionen direkt an Pedalen 90, 94 ausführt. Die Fig. 16B ermöglicht es dem Nutzer also, die kreisförmige Kurbelbewegung von einer erhöhten Position aus auszuführen.

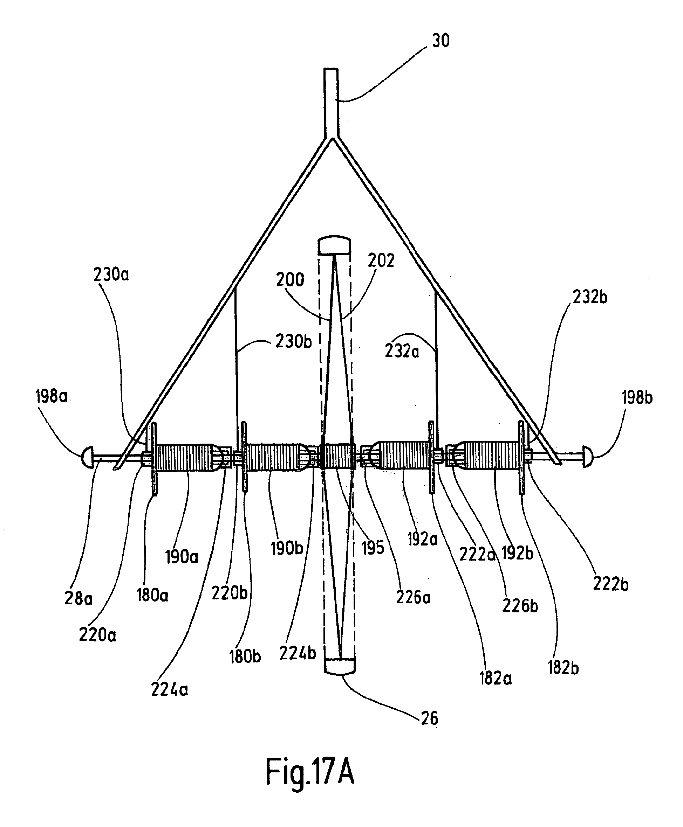

Fig. 17A veranschaulicht eine Ausführungsform mit Nabenschaltungen, mit einer drehbaren Vorderradwelle 28a, einer Lenkstange mit gabelförmigem Ende 30, einem rechten äußeren Zahnkranz 180a mit Rechtsantrieb, einem rechten inneren Zahnkranz 180b mit Rechtsantrieb, einem linken inneren Zahnkranz 182a mit Linksantrieb, einem linken äußeren Zahnkranz 182b mit Linksantrieb, einer rechten äußeren Nabe 190a mit integrierter Gangschaltung und Leerlauf, einer rechten inneren Nabe 190b mit integrierter Gangschaltung und Leerlauf, einer linken inneren Nabe 192a mit integrierter Gangschaltung und Leerlauf, einer linken äußeren Nabe 192b mit integrierter Gangschaltung und Leerlauf, einer zentrale Nabe 195 des Vorderrads, die fest mit der Vorderachse 28a verbunden ist, einer rechten Verschlusskappe 198a, einer linken Verschlusskappe 198b, einer rechten Speiche des Vorderrads 200, einer linken Speiche des Vorderrads 202, einer Achse der rechten äußeren Nabe 220a, einer Achse der rechten inneren Nabe 220b, einer Achse der linken inneren Nabe 222a, einer Achse der linken äußeren Nabe 222b, einem Verbindungsstück 224a zwischen rechtem äußeren Nabengehäuse und drehbarer Vorderradwelle 28a, einem Verbindungsstück 224b zwischen rechtem inneren Nabengehäuse und drehbarer Vorderradwelle 28a, einem Verbindungsstück 226a zwischen linkem inneren Nabengehäuse und drehbarer Vorderradwelle 28a, einem Verbindungsstück 226b zwischen linkem äußeren Nabengehäuse und drehbarer Vorderradwelle 28a, einer Fixierungsstange 230a für die Achse der rechten äußeren Nabe 190a, einer Fixierungsstange 230b für die Achse der rechten inneren Nabe 190b, einer Fixierungsstange 232a für die Achse der linken inneren Nabe 192a und einer Fixierungsstange 232b für die Achse der linken äußeren Nabe 192b.

Die Fig. 17A zeigt eine ähnliche Konstruktion wie die Ausführungsform gemäß der Fig. 15B. Da bei dieser Konstruktion Nabenschaltungen/-Antriebe eingesetzt werden, ergeben sich dadurch bedeutende Veränderungen. Unter anderem wird bei der Fig. 17A die fest montierte Vorderachse 28 durch eine drehbare Vorderradwelle 28a ersetzt, die selbst angetrieben werden kann, aber selbst auch für den Antrieb des Vorderrads 26 zuständig ist. Diese Vorderradwelle 28a ist an der Lenkstange 30 drehbar gelagert. Sie ist dabei durch alle 4 Naben 190a, 190b, 192a, 192b drehbar durchgeführt und hat feste Verbindungen zu den jeweiligen Nabengehäusen. Dies wird mit Hilfe der Verbindungsstücke 224a, 224b, 226a, 226b erreicht. Des Weiteren ist diese Vorderradwelle 28a in der Mitte mit der zentralen Nabe des Vorderrads 195 fest verbunden, das heißt eine Drehung der Welle 28a bedeutet zugleich auch eine Drehung der zentralen Nabe des Vorderrads 195. Eine weitere Besonderheit dieser Konstruktion ist, dass alle Naben 190a, 190b, 192a, 192b zusätzliche Achsen 220a, 220b, 222a, 222b in der Mitte haben, die jeweils durch Fixierungsstangen 230a, 230b, 232a, 232b fest mit der Lenkstange 30 verbunden sind. Dadurch bleiben sie stets starr, was für den Antrieb dieser Naben 190a, 190b, 192a, 192b notwendig ist. Diese Achsen 220a, 220b, 222a, 222b übernehmen die Funktion einer herkömmlichen Achse bei Nabenschaltungen/-Antrieben mit Leerlauf. Zudem sind sie röhrenförmig konstruiert und haben innen einen Hohlraum, durch den die Vorderradwelle 28a durchgeführt wird.

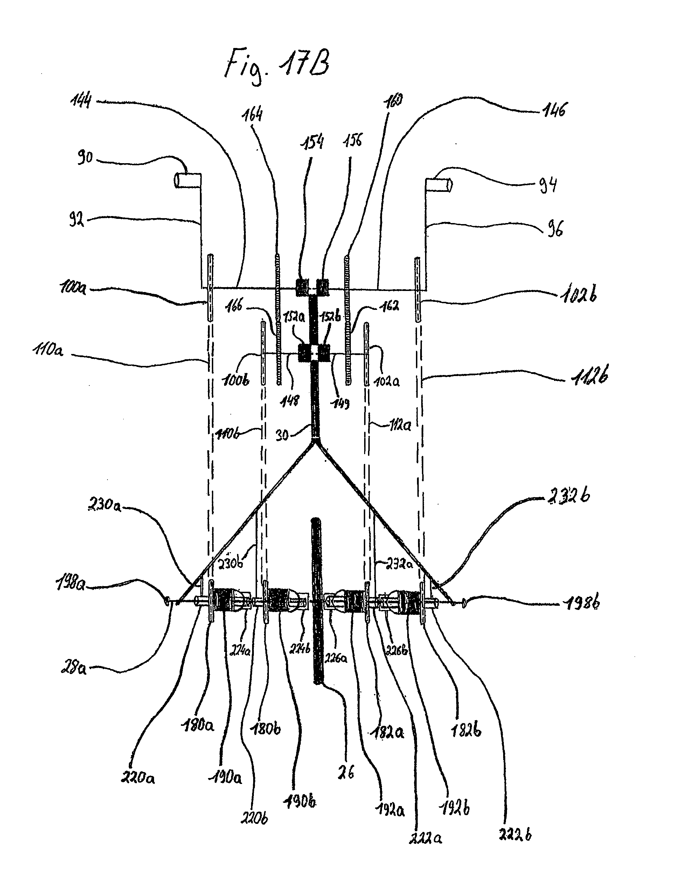

Fig. 17B zeigt eine Ausführungsform mit einer drehbaren Vorderradwelle 28a, einer Lenkstange 30 mit gabelförmigem Ende, einem rechten Pedal 90, einem rechten Pedalarm 92 (rechte Tretkurbel), einem linken Pedal 94, einem linken Pedalarm 96 (linke Tretkurbel), einem rechten oberen Kettenblatt 100a, einem rechten unteren Kettenblatt 100b, einem linken unteren Kettenblatt 102a, einem linken oberen Kettenblatt 102b, einer rechten äußeren Kette 110a, einer rechten inneren Kette 110b, einer linken inneren Kette 112a, einer linken äußeren Kette 112b, einer rechten oberen Achse 144, einer linken oberen Achse 146, einer rechten unteren Achse 148, einer linken unteren Achse 149, einem rechten unteren Tretlagergehäuse 152a , einem linken unteren Tretlagergehäuse 152b, einem rechten oberen Tretlagergehäuse 154, einem linken oberen Tretlagergehäuse 156, einem linken oberen Zahnrad 160, einem linken unteren Zahnrad 162, einem rechten oberen Zahnrad 164, einem rechten unteren Zahnrad 166, einem rechten äußeren Zahnkranz 180a mit Rechtsantrieb, einem rechten inneren Zahnkranz 180b mit Rechtsantrieb, einem linken inneren Zahnkranz 182a mit Linksantrieb, einem linken äußeren Zahnkranz 182b mit Linksantrieb, einer rechten äußeren Nabe 190a mit integrierter Gangschaltung und Leerlauf, einer rechten inneren Nabe 190b mit integrierter Gangschaltung und Leerlauf, einer linken inneren Nabe 192a mit integrierter Gangschaltung und Leerlauf, einer linken äußeren Nabe 192b mit integrierter Gangschaltung und Leerlauf, einer rechten Verschlusskappe 198a, einer linken Verschlusskappe 198b, einer Achse der rechten äußeren Nabe 220a, einer Achse der rechten inneren Nabe 220b, einer Achse der linken inneren Nabe 222a, einer Achse der linken äußeren Nabe 222b, einem Verbindungsstück 224a zwischen rechtem äußeren Nabengehäuse und drehbarer Vorderradwelle 28a, einem Verbindungsstück 224b zwischen rechtem inneren Nabengehäuse und drehbarer Vorderradwelle 28a, einem Verbindungsstück 226a zwischen linkem inneren Nabengehäuse und drehbarer Vorderradwelle 28a, einem Verbindungsstück 226b zwischen linkem äußeren Nabengehäuse und drehbarer Vorderradwelle 28a, einer Fixierungsstange 230a für die Achse der rechten äußeren Nabe 190a, einer Fixierungsstange 230b für die Achse der rechten inneren Nabe 190b, einer Fixierungsstange 232a für die Achse der linken inneren Nabe 192aund einer Fixierungsstange 232b für die Achse der linken äußeren Nabe 192b.

Die Variante gemäß Fig. 17B ist ähnlich wie die Ausführungsform gemäß Fig. 15B. Der Unterschied besteht insbesondere darin, dass hier Nabenschaltungen/- Antriebe eingesetzt werden. Um dies zu ermöglichen, wurde die Konstruktion der Figur 17A als untere Konstruktion übernommen. Die obere Konstruktion der Figur 17B ist mit der der Figur 15B identisch. Die Antriebswirkung dieser Konstruktion wird auf eine etwas andere Weise als bei der Konstruktion der Figur 15B erzielt. Insbesondere ist hier zu erwähnen, dass das Vorderrad 26 durch die Vorderradwelle 28a angetrieben wird. Wie bei der Fig. 15B wird auch hier mit jedem Schwenk der Pedalarme 92, 96 Antrieb erzeugt.

Im Folgenden werden Antriebsarten beschrieben.

### Rechte Seite:

Beim Kurbeln des rechten Pedalarms 92 nach vorn in Fahrtrichtung wird zum einen der rechte äußere Zahnkranz 180a nach vorn in Fahrtrichtung gedreht, wodurch sich das Nabengetriebe der rechten äußeren Nabe 190a nach vorn in Fahrtrichtung dreht (Drehrichtung rechts). Da es sich hierbei um eine Nabe mit Rechtsantrieb handelt, wird auch das Nabengehäuse angetrieben und nach vorn in Fahrtrichtung gedreht. Dieses Nabengehäuse ist durch ein Verbindungsstück 224a mit der Vorderradwelle 28a fest verbunden. Diese Vorderradwelle 28a wird in diesem Fall also ebenfalls nach vorn gedreht. Da, wie bereits in Fig. 17A beschrieben, die Vorderradwelle 28a fest mit der zentralen Nabe des Vorderrads 195 verbunden ist, wird diese ebenfalls nach vorn in Fahrtrichtung gedreht. Auf diese Weise wird das Vorderrad 26 also durch ein Vorwärtsschwenken des rechten Pedalarms 92 nach vorn in Fahrtrichtung angetrieben.

Zum anderen bewirkt ein Vorwärtsschwenken des rechten Pedalarms 92, dass der rechte innere Zahnkranz 180b nach hinten, entgegengesetzt der Fahrtrichtung gedreht wird (genauere Beschreibung der Funktion der Zahnräder s. Beschreibung der Fig. 15B). Da es sich bei der rechten inneren Nabe 190b jedoch um eine Nabe mit Rechtsantrieb handelt, bleibt das Nabengehäuse davon unberührt und befindet sich im Leerlauf. In diesem Fall dreht sich das Nabengehäuse der rechten inneren Nabe 190b auf Grund der festen Verbindung durch das Verbindungsstück 224b mit der Vorderradwelle 28a, welche durch die rechte äußere Nabe 190a nach vorn in Fahrtrichtung angetrieben wurde, ebenfalls nach vorn in Fahrtrichtung.

Ein Rückwärtsschwenken des rechten Pedalarms 92 nach hinten entgegengesetzt der Fahrtrichtung bewirkt zum einen, dass der rechte äußere Zahnkranz 180a nach hinten entgegengesetzt der Fahrtrichtung gedreht wird. Da es sich hierbei um einen Rechtsantrieb handelt, ist das Nabengehäuse dieser Nabe 190a vom Antriebsmechanismus entkoppelt und bleibt vom Antrieb unberührt, es befindet sich im Leerlauf. Das Nabengehäuse der rechten äußeren Nabe 190a dreht sich dennoch nach vorn in Fahrtrichtung, weil es durch das Verbindungsstück 224a fest mit der Vorderradwelle 28a verbunden ist. Zum anderen bewirkt ein Rückwärtsschwenken des rechten Pedalarms 92, dass sich der rechte innere Zahnkranz 180b nach vorn in Fahrtrichtung dreht (genaue Funktion der Zahnräder siehe Beschreibung der Fig. 15B). Auf Grund des Rechtsantriebs wird das Nabengehäuse der rechten inneren Nabe 190b ebenfalls nach vorn in Fahrtrichtung angetrieben. Das Nabengehäuse ist, wie in Fig. 17A beschrieben, durch das Verbindungsstück 224b fest mit der Vorderradwelle 28a verbunden und treibt diese in diesem Fall an. Es findet also Antrieb des Vorderrads 26 statt.

Verallgemeinert kann man sagen, dass ein Vorwärtsschwenken des rechten Pedalarms 92 in Fahrtrichtung einen Antrieb des Vorderrads 26 über die rechte äußere Nabe 190a und dem Verbindungsstück 224a nach vorn in Fahrtrichtung bewirkt, während sich die rechte innere Nabe 190b hierbei im Leerlauf befindet. Ein Rückwärtsschwenken des rechten Pedalarms 92 entgegengesetzt der Fahrtrichtung bewirkt hingegen, dass sich die rechte äußere Nabe 190a im Leerlauf befindet und das Vorderrad 26 durch die innere rechte Nabe 190b und das Verbindungsstück 224b angetrieben wird.

### Linke Seite:

Der Antrieb auf der linken Seite (in der Abbildung rechts) funktioniert analog zum Antrieb der rechten Seite, lediglich mit dem Unterschied, dass die Antriebsbauteile der linken Seite (Zahnkränze, Naben und dergleichen) spiegelverkehrt zu den Antriebsbauteilen der rechten Seite konstruiert sind. Des Weiteren besitzen die Naben der linken Seite 192a, 192b jeweils einen Linksantrieb.

Verallgemeinert kann man auch hier sagen, dass ein Vorwärtsschwenken des linken Pedalarms 96 nach vorn in Fahrtrichtung einen Antrieb des Vorderrads 26 über die linke äußere Nabe 192b und das Verbindungsstück 226b bewirkt, während sich die linke innere Nabe 192a im Leerlauf befindet. Das Nabengehäuse der linken inneren Nabe 192a dreht sich dabei auf Grund der festen Verbindung durch das Verbindungsstück 226a mit der Vorderradwelle 28a nach vorn in Fahrtrichtung.

Ein Rückwärtsschwenken des linken Pedalarms 96 hingegen bewirkt, dass das Vorderrad 26 über die linke innere Nabe 192a und dem Verbindungsstück 226a nach vorn in Fahrtrichtung angetrieben wird, während sich die linke äußere Nabe 192b im Leerlauf befindet. Auch hier dreht sich das Nabengehäuse der sich im Leerlauf befindenden Nabe 192b, das durch das Verbindungsstück 226b fest mit der Vorderradwelle 28a verbunden ist, nach vorn in Fahrtrichtung.

Durch getrennte Achsen (rechte obere Achse 144, linke obere Achse 146, rechte untere Achse 148, linke untere Achse 149, die unabhängig voneinander funktionieren, das heißt zur gleichen Zeit andere Drehrichtungen haben können, kommt es bei den Achsen 144, 146, 148, 149 zu keiner Zeit zu einer Blockade.

Die Fahrstile der Fig. 17B sind mit denen der Fig. 15B identisch.

An dieser Stelle sind noch einige Anmerkungen und Ergänzungen zu den Konstruktionen zu machen. Diese Ergänzungen betreffen unter anderem noch nicht erwähnte Bauteile wie Bremsen, Gangschaltungen, etc. Die Platzierung der Bremse, der Gangschaltung und der Haltegriffe des Rollers ist variabel. Die Bremse kann zum Beispiel als Hinterradbremse angebracht werden oder auch als Vorderradbremse. Die Schaltvorrichtung kann unter anderem an der Lenkstange oder am Pedalarm angebracht werden. Haltegriffe können zum Beispiel an einer verlängerten Achse oder am Tretlagergehäuse befestigt werden.

Die Lenkstange 30 und die Pedalarme 92, 96 sind innerhalb einer bestimmten Grenze stufenlos verstellbar, so dass deren Längen auf die Bedürfnisse des Fahrers eingestellt werden können.

Das Verstellen der Lenkstange 30 nach oben oder nach unten würde eine Veränderung der überschüssigen Kettenlänge nach sich ziehen. Die Länge der mitgelieferten Kette muss für die größtmögliche Länge der Lenkstange 30 ausreichend sein, das heißt je kürzer die Lenkstange 30 eingestellt wird, desto größer wird die überschüssige Kettenlänge.

Für dieses Problem bieten sich mehrere Lösungen an:
1. Vergrößertes Kettenspannelement: man kann größere Kettenspannelemente einsetzen. Ein Problem könnte hierbei sein, dass das Kettenspannelement eine Länge erreicht, die ein komfortables Fahren des Rollers unmöglich macht. Um die Länge des Kettenspannelements geringer zu halten, könnten weitere Kettenspannelemente zum Einsatz kommen.
2. Die Kette kann individuell gekürzt werden, wenn sich der Nutzer bereits von vornherein für eine bestimmte Höhe des Rollers entscheidet, das heißt die Länge der Lenkstange 30 bliebe konstant.
3. Eine weitere Lösung besteht darin, ein in der Höhe verstellbares Trittbrett 10 einzusetzen, so dass nicht die Lenkstange 30 nach oben oder nach unten verstellt werden muss.
4. Die Konstruktion der Figur 16B bietet eine weitere Möglichkeit, die Länge der Lenkstange 30 nicht verstellen zu müssen, das heißt das Problem der zusätzlich überschüssigen Kettenlänge durch das Verstellen der Lenkstange 30 entfällt ebenfalls.
5. Eine zusätzliche Möglichkeit, den Roller in der Höhe zu verstellen, ohne die Länge der Lenkstange 30 zu verändern, besteht darin, einen Mechanismus zu konstruieren, der es ermöglicht, die Lenkstange 30 nach vorn zu versetzen und gleichzeitig nach hinten zu kippen.

Der Roller kann so konstruiert werden, dass er entweder zusammenklappbar oder trennbar ist, um einen komfortablen Transport zu ermöglichen.

Um zusätzliche Übersetzungen zu erreichen, kann man Zahnräder verschiedener Größen einsetzen. Wählt man zum Beispiel für die Fig. 8B das obere linke Zahnrad 160 größer und das untere linke Zahnrad 162 kleiner, ergibt das eine größere Übersetzung für die linke Seite des Antriebs.

Wie bei einem Fahrrad, kann man auch hier elektronische Antriebshilfen in Anspruch nehmen. Auch patentgeschützte Antriebshilfen können zum Einsatz kommen, da eine Übereinkunft mit dem Patentinhaber erzielt werden kann.

Eine Konstruktion mit zwei Zahnrädern 160, 162, in Fig. 8B auf der linken Seite des Rollers, die es ermöglicht, am unteren Zahnrad 162 eine Kette für den Antrieb zu befestigen, hat den Vorteil, dass auf ein linkes Kettenblatt 102 verzichtet werden kann. Die beiden Zahnräder 160, 162 müssten so konstruiert sein, dass sie nicht bis zum Anschlag verzahnt sind, sondern lediglich an den äußeren Rändern der Zähne. Darunter würde die Kette, die speziell für diese Zahnräder konstruiert sein muss, am unteren Zahnrad 162 geführt werden. Diese Kette ist direkt mit dem Zahnkranzpaket 132 verbunden und für den Antrieb zuständig. Selbstverständlich müssten die Zahnkränze des Zahnkranzpakets 132 so konstruiert werden, dass sie die Kette aufnehmen können. Dies gilt für alle Konstruktionen, bei denen die Zahnräder 160, 162 zum Einsatz kommen.

Antriebsarten wie bei einem herkömmlichen Roller sind möglich. Der Antrieb wird, wie bei einem herkömmlichen Roller, durch das Abstoßen mit einem Fuß erreicht. Es gibt hierbei mehrere Möglichkeiten, sich festzuhalten, unter anderem, indem man sich an den Pedalen 90, 94 festhält. Eine weitere Möglichkeit besteht darin, dass die Achse 140 verlängert wird (etwa um eine Handbreite). Diese Strecke kann dann mit Schaumstoff oder Gummi überzogen werden, damit sich der Fahrer komfortabler festhalten kann. Weiterhin ist auch möglich, eine Halterung an das Tretlagergehäuse 150 anzubringen, damit der Fahrer sich daran festhalten kann. Durch den Einbau eines stufenlosen Arretierungsmechanismus kann der Fahrer entscheiden, in welchen Stellungen er die Pedalarme 92, 96 fixieren will, zum Beispiel kann er die Pedalarme 92, 96 so verstellen, dass sie einander gegenüber liegen (wie beim Fahrrad) oder auch neben einander.

Es gilt für alle Rollervarianten, dass die Pedalarme 92, 96 sich im Rollzustand nicht mitdrehen.

Alle Rollervarianten können so konstruiert werden, dass entweder nur das Vorderrad 26, nur das Hinterrad 20 (bei 2 Hinterrädern beide Hinterräder 22, 24) oder Vorderrad 26 und Hinterrad 20/Hinterräder 22,24 zeitgleich angetrieben werden können.

Anstatt der Kette wären auch Keilriemen als Antriebsmittel nutzbar.

Eine weitere Alternative um ein Zusammenstoßen der Ketten mit der Verbindungsstange 50 zu vermeiden, besteht darin, den Roller so zu konstruieren, dass die Antriebsbauteile zum Beispiel Kettenblätter, Zahnkranpakete, Ketten etc. einen größeren Abstand zur Vorderradmitte haben.

Die Figuren veranschaulichen, dass jeder Antrieb ein Zahnkranzpaket mit einem Schaltwerk mit Kettenspannelement 120, 122 in der Art einer Fahrrad-Gangschaltung aufweist, wie Fig. zum Beispiel 6A zeigt, oder eine Naben-Gangschaltung umfasst, wie Fig. 14A zeigt

Jeder Antrieb umfasst eine Handkurbel mit jeweils horizontalem Handgriff 90, 94, wie Fig. 6B zeigt.

Jeder Antrieb kann mit einem Pedalarm mit im Wesentlichen senkrechten Schwenkgriffen versehen sein. Der Griff ist entweder horizontal oder senkrecht angeordnet. Die senkrechten Schwenkgriffe (Kurbelverlängerungsstangen 99a, 99b) dienen in erster Linie als Verlängerung der Pedalarme 92, 96, um dem Fahrer zu ermöglichen, die Kurbel- oder Pendelbewegung von einem erhöhten Standpunkt aus auszuführen. Wenn oben an den Kurbelverlängerungsstangen 99a, 99b eine Pendelbewegung stattfindet, so findet auch am Pedalarm eine Pendelbewegung statt und keine kreisförmige Kurbelbewegung. Diese würde nur zustande kommen, wenn auch an den vertikalen Kurbelverlängerungsstangen 99a, 99b eine Kurbelbewegung stattfindet.

Zwei jeweils einem Handgriff zugeordneten Antriebsseiten können mit jeweils mehreren Antrieben vorhanden sein, wie Fig. 15 B zeigt.

Der Handantrieb wirkt auf das Vorderrad 26 ein, wobei das Vorderrad 26 mit zwei Handgriffen wirkverbunden ist, wie Fig. 8B zeigt.

Zusammenfassend kann festgestellt werden, dass folgende Rollervarianten möglich sind:
Eine Rollervariante, bei der durch das Schwenken oder Kurbeln in beiden Richtungen Antrieb erzeugt werden kann. Es gibt hierbei keine erzwungene "Leerlaufphasen".

Eine Rollervariante, bei der mindestens zwei unabhängig voneinander funktionierende Achsen zum Einsatz kommen.

Eine Rollervariante, bei der mindestens zwei unabhängig voneinander funktionierende Tretlagergehäuse zum Einsatz kommen.

Eine Rollervariante, bei der die Lenkstange 30 ein Abstandselement beziehungsweise einen Abstandshalter 60 umfasst, um ein Zusammenstoßen der Ketten mit der Verbindungsstange 50 zu vermeiden (Fig. 8C).

Eine Rollervariante, bei der die Lenkstange 30 und die Ketten 110, 112 durch eine Halterung 40 mit einem Lagerelement 72 geführt werden, um ein Zusammenstoßen der Ketten mit der Verbindungsstange 50 zu vermeiden (Fig. 9A).

Eine Rollervariante, bei der die Vorderradnabe mindestens zwei gegenläufige Gewinde für die Montage der gegenläufigen Zahnkranzpaketen beider Antriebsseiten hat.

Eine Rollervariante, bei der die Handkurbeln entweder wirkverbunden sind oder durch getrennte Achsen 144, 146 unabhängig voneinander funktionieren. Bei diesen Figuren mit getrennter oberer Achse sind auch Antriebsbewegungen wie bei einem "Crosstrainer" möglich. Bei den Figuren 12A, 13A, 15B und 17B ist mit der "Crosstrainerantriebsbewegung" ein permanenter Antrieb möglich.

Eine Rollervariante, bei der beim Einsatz von je zwei Zahnrädern 160+162, 164+166 auf je einer Antriebsseite die Achsen 148, 149 der unteren Zahnräder nicht miteinander wirkverbunden sind.

Eine Rollervariante, bei der beim Einsatz von mindestens zwei Nabenschaltungen/-antrieben diese entweder ein gemeinsames Gehäuse besitzen oder aber mit einer zentralen Nabe 195 des Vorderrads 26 wirkverbunden sind.

Eine Rollervariante, bei der beim Einsatz von mehreren Antrieben auf einer Seite (Fig. 15B und Fig.17B) durch jede Schwenk- oder Kurbelbewegung auf jeder Seite Antrieb erzeugt wird.

Eine Rollervariante, bei der beim Einsatz von mehreren Nabenantrieben/- schaltungen auf einer Antriebsseite eine Vorderradwelle 28a, welche mit allen Nabengehäusen wirkverbunden ist, zum Einsatz kommt.

Möglich ist eine "einfachste Konstruktion" gemäß Fig. 8AI, das heißt eine Variante mit lediglich einem Antriebsmittel, welche jedoch nicht Teil der vorliegenden Erfindung ist. Diese Ausführungsform kann entweder ohne Zahnräder oder mit 2 Zahnrädern ausgestattet sein, gemäß einer Antriebsseite der Figur 13A.

Senkrechte Schwenkgriffe können eine Kurbelverlängerungsfunktion aufweisen (Figur 16B).

Der Gegenstand der Anmeldung ist nicht auf diese Beispiele beschränkt, so können Merkmale eines Beispieles mit einem oder mehreren Merkmalen eines anderen gezeigten oder beschriebenen Beispieles miteinander kombiniert werden.

### Bezugszeichenliste

- Trittbrett: 10

- Hinterrad: 20
- linkes Hinterrad: 22
- rechtes Hinterrad: 24
- Vorderrad: 26
- Vorderachse: 28
- drehbare Vorderradwelle: 28a

- Lenkstange: 30

- Halterung: 40

- Verbindungsstange: 50
- Verbindungsstange: 52

- Abstandshalter: 60
- Kugellager: 61

- Durchführungsstange: 70
- Lagerelement: 72

- Verbindungselement: 80

- rechtes Handpedal: 90
- rechter Pedalarm: 92
- linkes Handpedal: 94
- linker Pedalarm: 96

- rechte Kurbelverbindungsstange: 98a
- linke Kurbelverbindungsstange: 98b
- rechte Kurbelverlängerungsstange: 99a
- linke Kurbelverlängerungsstange: 99b

- rechtes Kettenblatt: 100
- rechtes oberes Kettenblatt: 100a
- rechtes unteres Kettenblatt: 100b

- linkes Kettenblatt: 102
- linkes unteres Kettenblatt: 102a
- linkes oberes Kettenblatt: 102b

- rechte Kette: 110
- rechte äußere Kette: 110a
- rechte innere Kette: 110b

- linke Kette: 112
- linke innere Kette: 112a
- linke äußere Kette: 112b

- rechtes Schaltwerk mit Kettenspannelement: 120
- rechtes äußeres Schaltwerk mit Kettenspannelement: 120a
- rechtes inneres Schaltwerk mit Kettenspannelement: 120b

- linkes Schaltwerk mit Kettenspannelement: 122
- linkes inneres Schaltwerk mit Kettenspannelement: 122a
- linkes äußeres Schaltwerk mit Kettenspannelement: 122b

- Halterung: 123a
- Halterung: 123b

- rechtes Zahnkranzpaket: 130
- rechtes äußeres Zahnkranzpaket: 130a
- rechtes inneres Zahnkranzpaket: 130b

- linkes Zahnkranzpaket: 132
- linkes inneres Zahnkranzpaket: 132a
- linkes äußeres Zahnkranzpaket: 132b

- obere Achse: 140
- untere Achse: 142

- rechte obere Achse: 144
- linke obere Achse: 146

- rechte untere Achse: 148
- linke untere Achse: 149

- oberes Tretlagergehäuse: 150
- unteres Tretlagergehäuse: 152
- rechtes unteres Tretlagergehäuse: 152a
- linkes unteres Tretlagergehäuse: 152b

- rechtes oberes Tretlagergehäuse: 154
- linkes oberes Tretlagergehäuse: 156

- linkes oberes Zahnrad: 160
- linkes unteres Zahnrad: 162

- rechtes oberes Zahnrad: 164
- rechtes unteres Zahnrad: 166

- Rechtsgewinde der Nabe: 170
- äußeres Rechtsgewinde der Nabe: 170b
- inneres Rechtsgewinde der Nabe: 170c

- Linksgewinde der Nabe: 172
- inneres Linksgewinde der Nabe: 172b
- äußeres Linksgewinde der Nabe: 172c

- rechter Zahnkranz: 180
- rechter äußerer Zahnkranz: 180a
- rechter innerer Zahnkranz: 180b

- linker Zahnkranz: 182
- linker innerer Zahnkranz: 182a
- linker äußerer Zahnkranz: 182b

- rechte Nabe: 190
- rechte äußere Nabe: 190a
- rechte innere Nabe: 190b

- linke Nabe: 192
- linke innere Nabe: 192a
- linke äußere Nabe: 192b

- rechter äußerer Speichenflansch: 194a
- rechter innerer Speichenflansch: 194b

- zentrale Nabe: 195

- linker innerer Speichenflansch: 196a
- linker äußerer Speichenflansch: 196b

- rechte Verschlusskappe: 198a
- linke Verschlussklappe: 198b

- rechte Speiche: 200
- linke Speichen: 202

- Verbindungsstück: 210
- Verbindungsstück: 212

- Achse der rechten äußeren Nabe: 220a
- Achse der rechten inneren Nabe: 220b
- Achse der linken inneren Nabe: 222a
- Achse der linken äußeren Nabe: 222b

- Verbindungsstück: 224a
- Verbindungsstück: 224b

- Verbindungsstück: 226a
- Verbindungsstück: 226b

- Fixierungsstange: 230a
- Fixierungsstange: 230b

- Fixierungsstange: 232a
- Fixierungsstange: 232b

## Patentansprüche

1. Roller mit Handantrieb, umfassend ein Trittbrett (10) für einen auf ihn stehenden Fahrer, mindestens ein Hinterrad (22, 24), mindestens ein Vorderrad (26) sowie einen auf das Vorderrad (26) wirkenden Lenker, und ein Antriebsmittel, das mit einem Rad und mindestens einem Handgriff wirkverbunden ist, wobei wenigstens ein zweites Antriebsmittel mit dem anzutreibenden Rad und mindestens einem Handgriff wirkverbunden ist, wobei beide Antriebsmittel einen Freilauf beziehungsweise einen Leerlauf bei einer Rückbewegung umfassen, und wobei ein Antrieb gegenläufig zum anderen Antrieb ausgeführt ist, **gekennzeichnet durch** eine Ausführung, bei der der Handantrieb sowohl **durch** eine Handkurbelbetätigung als auch **durch** eine Schwenkbetätigung betätigbar ausgeführt ist.

2. Roller nach Anspruch 1, **gekennzeichnet durch** eine Ausführung derart, dass der Antrieb **durch** eine gegenläufige Arm- und Pendelbewegung betätigbar ausgeführt ist.

3. Roller nach Anspruch 1 oder 2, **dadurch gekennzeichnet, dass** ein Antrieb mindestens einer Antriebsseite zwei gegenläufige Antriebsräder, insbesondere Zahnräder (160, 162) umfasst, um eine Betätigungsrichtung des Antriebes auf dieser Antriebsseite umzudrehen, wobei vorzugsweise vorhandene Bauteile derart ausgeführt sind, dass vollständig kreisförmige Kurbelbewegungen in beiden Drehrichtungen der Antriebe möglich sind.

4. Roller nach einem der vorhergehenden Ansprüche, **dadurch gekennzeichnet, dass** jeder Antrieb als Kettenantrieb mit einer Gangschaltung ausgeführt ist.

5. Roller nach einem der vorhergehenden Ansprüche, **dadurch gekennzeichnet, dass** jeder Antrieb ein Zahnkranzpaket (130, 132) mit einem Schaltwerk mit Kettenspannelement (120, 122) in der Art einer Fahrrad-Gangschaltung aufweist oder eine Naben-Gangschaltung umfasst.

6. Roller nach einem der vorhergehenden Ansprüche, **dadurch gekennzeichnet, dass** jeder Antrieb eine Handkurbel mit jeweils horizontalem Handgriff umfasst.

7. Roller nach einem der Ansprüche 1 bis 5, **dadurch gekennzeichnet, dass** jeder Antrieb mit einem Pedalarm (92, 96) mit im Wesentlichen senkrechten Schwenkgriffen versehen ist, wobei vorzugsweise senkrechte Schwenkgriffe eine Kurbelverlängerungsfunktion aufweisen.

8. Roller nach einem der vorhergehenden Ansprüche, **dadurch gekennzeichnet, dass** zwei jeweils einem Handgriff zugeordnete Antriebseiten mit jeweils mehreren Antrieben vorhanden sind.

9. Roller nach einem der vorhergehenden Ansprüche, **dadurch gekennzeichnet, dass** der Handantrieb auf das Vorderrad (26) einwirkt, wobei das Vorderrad (26) mit zwei Handgriffen wirkverbunden ist.

10. Roller nach einem der vorhergehenden Ansprüche, **dadurch gekennzeichnet, dass** eine gemeinsame obere Achse (140) derart ausgeführt ist, dass beide Antriebsmittel jeweils mit beiden Handgriffen wirkverbunden sind.

## Claims

1. Scooter with manual drive, comprising a footboard (10) for a rider standing thereon, at least one rear wheel (22, 24), at least one front wheel (26) as well as a handlebar acting on the front wheel (26), and a driving means which is operatively connected to a wheel and to at least one hand-grip, wherein at least one second driving means is operatively connected to the wheel to be driven and to at least one hand-grip, wherein both driving means comprise a freewheeling and idling during a shifting motion, and wherein one drive is designed to be opposed to the other drive, **characterized by** an embodiment in which the manual drive is designed to be actuable both by hand-crank actuation and by pivoting actuation.

2. Scooter according to claim 1, **characterized by** an embodiment in such a way that the drive is can be performed by a counter-rotating movement of the arm and a reciprocating movement.

3. Scooter according to claim 1 or 2, **characterized in that** a drive of at least one drive side comprises two counter-rotating drive wheels, in particular gear wheels (160, 162) to reverse a direction of actuation of the drive on said drive side, wherein preferably existing components are configured in such a way that full circular crank movements in both directions of rotation of the drives are possible.

4. Scooter according to one of the preceding claims, **characterized in that** each drive is configured as a chain drive with a transmission.

5. Scooter according to one of the preceding claims, **characterized in that** each drive has a sprocket assembly (130, 132) with a rear derailleur with a chain tensioner (120, 122) in the manner of a bicycle gearshift or comprises a hub gearshift.

6. Scooter according to one of the preceding claims, **characterized in that** each drive comprises a hand crank, each with a horizontal handle.

7. Scooter according to one of claims 1 to 5, **characterized in that** each drive is provided with a pedal arm (96 92) with substantially vertical pivoting handles, preferably vertical pivot handles have a crank extension function.

8. Scooter according to one of the preceding claims, **characterized in that** there are two drive sides, each associated to one handle and having several drives.

9. Scooter according to one of the preceding claims, **characterized in that** the manual drive acts on the front wheel (26), wherein the front wheel (26) is operatively connected with two handles.

10. Scooter according to one of the preceding claims, **characterized in that** a common upper axis (140) is configured in such a way that both drive means are operatively connected with both handles each.

## Revendications

1. Trottinette à entraînement manuel, comprenant un marchepied (10) pour un conducteur qui s'y tient debout, au moins une roue arrière (22, 24), au moins une roue avant (26) ainsi qu'un guidon agissant sur la roue avant (26), et un moyen d'entraînement, qui est en liaison active avec une roue et au moins une poignée, dans laquelle au moins un deuxième moyen d'entraînement est en liaison active avec la roue à entraîner et au moins une poignée, dans laquelle les deux moyens d'entraînement comprennent une roue libre ou une marche à vide lors d'un mouvement de recul, et dans laquelle un entraînement est réalisé à contre-sens par rapport à l'autre entraînement, **caractérisée par** une exécution dans laquelle l'entraînement manuel est réalisé de façon actionnable aussi bien par un actionnement par manivelle que par un actionnement par pivotement.

2. Trottinette selon la revendication 1, **caractérisée par** une exécution telle que l'entraînement soit réalisé de façon actionnable par un mouvement des bras et pendulaire de sens opposé.

3. Trottinette selon la revendication 1 ou 2, **caractérisée en ce qu'**un entraînement d'au moins un côté d'entraînement comprend deux roues motrices de sens contraire, en particulier des roues dentées (160, 162), pour inverser une direction d'actionnement de l'entraînement sur ce côté d'entraînement, dans laquelle des pièces de préférence existantes sont réalisées de telle manière que des mouvements de manivelle complètement circulaires soient possibles dans les deux directions de rotation des entraînements.

4. Trottinette selon l'une quelconque des revendications précédentes, **caractérisée en ce que** chaque entraînement est réalisé sous forme d'entraînement à chaîne avec un changement de vitesse.

5. Trottinette selon l'une quelconque des revendications précédentes, **caractérisée en ce que** chaque entraînement présente un paquet de couronnes dentées (130, 132) avec un mécanisme de changement de vitesse avec un élément tendeur de chaîne (120, 122) à la manière d'un changement de vitesse de bicyclette ou comprend un changement de vitesse dans le moyeu.

6. Trottinette selon l'une quelconque des revendications précédentes, **caractérisée en ce que** chaque entraînement comprend une manivelle avec chaque fois une poignée horizontale.

7. Trottinette selon l'une quelconque des revendications 1 à 5, **caractérisée en ce que** chaque entraînement est muni d'un bras de pédale (92, 96) avec des poignées pivotantes essentiellement perpendiculaires, dans laquelle des poignées pivotantes de préférence perpendiculaires présentent une fonction de prolongement de la manivelle.

8. Trottinette selon l'une quelconque des revendications précédentes, caractérisée en ce deux côtés d'entraînement respectivement associés à une poignée sont présents respectivement avec plusieurs entraînements.

9. Trottinette selon l'une quelconque des revendications précédentes, **caractérisée en ce que** l'entraînement manuel agit sur la roue avant (26), dans laquelle la roue avant (26) est en liaison active avec deux poignées.

10. Trottinette selon l'une quelconque des revendications précédentes, **caractérisée en ce qu'**un axe supérieur commun (140) est réalisé de telle manière que les deux moyens d'entraînement soient en liaison active respectivement avec les deux poignées.
